# EUROPEAN PATENT SPECIFICATION

(11) **EP 1 909 231 B1**
(45) Date of publication and mention of the grant of the patent: **13.07.2011**
(21) Application number: 06020988.9
(22) Date of filing: 06.10.2006
(51) Int. Cl.: G07B 15/00, G01C 21/30

(54) **Route usage evaluation**
Straßenbenutzungserfassung
Enregistrement de péage routier

(43) Date of publication of application: 09.04.2008
(60) Divisional application: 08161588.2
(73) Proprietor: Deutsche Telekom AG, 53113 Bonn (DE)
(72) Inventor: Lannes, Andreas, 85570 München (DE); Leinberger, Uwe, 80993 München (DE); Rollafson, David, Buckinghamshire HP10 8JL (GB)
(74) Representative: Wilding, Frances Ward

(56) References cited:
- EP-A- 1 300 809
- EP-A- 1 517 271
- EP-A1- 1 050 853
- EP-A1- 1 120 749
- WO-A-98/18105
- DE-A1- 4 344 433
- DE-U1- 20 321 002
- US-A1- 2004 181 495
- US-A1- 2006 106 671

## Description

### Background

The present invention relates to route usage evaluation schemes. Such schemes are usually embodied as road user charging schemes, in which the user pays for road use according to criteria such as motorway use, certain congested zones, and/or charging for certain types of road vehicle.

The technology has significant other implementations. The present invention therefore is not limited to roads but may apply to use of other routes such as railways, shipping routes, air routes etc. with vehicles such as trains, ships and aeroplanes. Moreover, there need not be a specific charging element for use of the route. For example, the route usage may be evaluated for providing insurance .data in pay-as-you-drive insurance schemes. Furthermore, route usage evaluation schemes have applications in avoiding tachometer fraud and in telematics use.

It is in road user charging that the invention primarily finds application. Systems for collecting such a toll are becoming more widespread and are developing from the original "vignette" system and manual toll-booth systems to more sophisticated electronic implementations. These systems use on-board equipment (OBE, also know as an on-board unit, OBU) which can communicate with a charging system to determine road usage and charging. The charging systems are known as back-end systems. One combination of an OBE and a back-end system is known from DE 4344433. Some form of communication is required to determine the position of the OBE and thus of the vehicle and transmit this information to the back-end system. For example, EP 1 517 271 uses an assistance server in communication between vehicles and a toll collection service.

### General Prior Art Review

There are two fundamental types of electronic prior art road user charging systems:

GPS-type systems; these are systems in which the OBE has an awareness of its own position. DE 20321004 U1 for example discloses a GPS based system. The OBE may also have the intelligence to determine the road user charge incurred, and the ability to communicate charging information from the vehicle to the back-end system (or data centre) for processing and billing. GPS-type systems eliminate or at least minimize the costly fixed infrastructure required at the roadside.

An example of a GPS-based road user system is that currently implemented in Switzerland for lorries. The means of measuring driven distance is via the tachometer input, which is calibrated using a GPS within the OBE. However, there are a number of serious limitations with respect to the use of the tachometer signal because it requires installation of a tachometer.

Tachometer input does provide accurate determination of both the speed of the vehicle and driven distance when calibrated using the GPS sub-system. This is the mode of operation of the current Swiss lorry road user charging scheme. Another GPS-based system is in the current German Toll Collect system. The tachometer input is also used here, but as a supplemental sensor to improve the OBE with its dead reckoning capabilities (assisted by the gyro).

The German Toll-Collect system provides automatic toll collection using OBE. Toll roads are recognized by the OBE using GPS and toll calculation handled by the OBE, with data transfer to a computer center using GSM. The computer center produces receipts and also data updates as necessary.

The other type of system is a beacon based system - here the OBE is usually of limited intelligence, and only able to identify itself and send basic status information as the vehicle passes one of many roadside beacons. The roadside beacons are networked to the back-end system in which all the road user charging intelligence resides. Although beacon systems require a large amount of roadside infrastructure, they are able to leverage a much simpler and cost effective OBE.

Dedicated Short Range Communications (DSRC) is commonly used for roadside to vehicle communications and operates in the Microwave spectrum at frequencies of 5.8GHz (Europe) and 5.9GHz (USA). In addition, Infra-Red communication at a frequency of 850nm is also used (such as in Germany) but is significantly less prevalent than microwave.

In a beacon based road tolling system (such as that used in Austria), the identification of a moving vehicle by a roadside gantry using DSRC is the primary means by which the location of the vehicle (and hence distance travelled) is determined. The use of DSRC with pre-pay is also exhibited in the majority of toll plaza "free flow" passes such as Autostrade's TelePass system and systems run by a number of French operators.

Beacon-based road user charging systems typically utilise roadside enforcement gantries (of varying degrees of complexity) to determine whether the OBE in passing vehicles are operating as prescribed by the scheme. OBE that have failed, or which are being operated incorrectly (inadvertently or in an attempt to defraud the scheme) are identified by the enforcement system and appropriate action taken. Enforcement systems typically combine the functions of DSRC vehicle identification, automatic number plate recognition (ANPR), and video/still image processing for evidential validation.

Also, in GPS based systems, the DSRC communications may be used for the purpose of enforcement, and/or to augment the positional accuracy of the GPS system. For example in Toll Collect, the OBE is queried via DSRC and the vehicle is also scanned for the registration number and toll applicable. If there is no or an inactive OBE, the data center checks for manual payment. If there is no manual payment, enforcement procedures ensue.

DSRC provides for a bi-directional communication between vehicle and roadside gantry. In a simple (i.e. ideal) configuration of single vehicle and roadside gantry, transmission speeds are approximately 500Kbps downstream (from gantry to vehicle) and 200Kbps upstream (from vehicle to gantry). Multi-vehicle situations, environmental conditions and the operation of the HDLC based protocol as per the CEN 278 DSRC specification mean that actual throughput will likely be less.

In cases where the road geometry causes ambiguity of position that cannot be resolved on-board the OBE, it may be necessary to deploy assistive positional beacons at the roadside as well as a GPS system. For example, in the German Toll Collect project, a few hundred of these assistive positional beacons are also deployed to account for tunnels and instances where chargeable and non-chargeable roads run parallel for significant distances. It is important to recognise that the need for these position assistive beacons in the Toll Collect system arises principally from the requirement mandating that the presence on a chargeable road segment must be unambiguously determined within the first 1/3 driven distance of the segment.

Power provisioning is one of the primary differences between GPS systems and the alternative DSRC based toll plaza and free-flow beacon systems. GPS receivers require continuous power to operate, and therefore either require a permanent power connection or else substantial battery reserves.

DSRC systems derive the majority of their power from absorption of the microwave carrier signal transmitted by the roadside equipment, and therefore require only a small battery reserves to power them from many months to over a year.

### Map matching

### Prior Art

In many route usage evaluation schemes, it is necessary to match data as to the vehicle position against a map in order to determine whether the route used is part of the scheme. For example, some schemes are motorway-only schemes and the system must distinguish between motorways and other roads which may be very close and even parallel to the motorway.

The map matching process may be categorised in respect of the location of the map data.

On-board map matching - where the map data is stored on the OBE, enabling the OBE to directly compare its position and determine the route usage, for example a charge liability, itself. On-board approaches tend to leverage this distributed processing capability so as to minimize the volume of charging data required to be sent to the back-end system.

Off-board map matching - where the OBE does not have the map data, so must send its positional updates (in real-time, near real-time, or in batches) to the back-end system where it may be compared against a centralized map. Off-board map matching trades reduced complexity in the on-board processing for increased processing within the back-end system.

On-board map matching requires transmission only of the result but requires a large map on the OBE which must be maintained and transmitted. Off-board map matching eliminates the on-board map but at the expense of increased data transmission.

Most current systems employ off-board map matching such as in the Toll-Collect system in Germany, with a less intelligent OBE and the map matching only in the back-end system.

There has been much debate about the advantages and disadvantages of on-board and off-board map matching.

Where the maximum processing is performed on-board the OBE in order that the volume of data required to be transmitted from the OBE to the back-end system is minimized, only the "result" (e.g. charge liability) is transmitted by the OBE; it therefore follows that a distributed architecture also minimises the processing capacity required of the back-end system.

Where the minimum of processing in performed on-board the OBE in order to reduce the cost and complexity of the device, the majority of processing instead is performed off-board by the back-end system. It follows that the volume of data required to be transmitted from each OBE to the back-end system will be at least an order of magnitude greater than for a comparable distributed system. The processing capacity of the back-end system must also be much larger than that required in a comparable distributed system.

Consideration of these two architectures from both a technical and commercial standpoint has led many people to the conclusion that the distributed architecture is most preferable in satisfying the overall objectives of the system for the following reasons:
Technical Scalability - Distributed systems scale better than centralised systems. As each OBU is added, the incremental processing power embodied within the OBU is also added to the system, whilst there is minimal incremental load placed on the back-end systems.
Economies of Scale - High production volumes of OBE (especially for a unified pan-European OBE) lead to reduced unit prices. Distributed systems are able to leverage such economies whereas centralised systems cannot (as bespoke data centres are unlikely to conform to volume pricing dynamics).
Total Overall Cost - It is more cost effective to build and utilise processing capability on-board the OBE than in the back-end system. The incremental cost to double the processing capability and memory of an OBE is a typically only small percentage of the original cost. This would not the case for doubling the capacity of a back-end data-centre.
Viability for Large Systems - The European truck population is of the order of -3 million vehicles, whereas the passenger car population is of the order of hundreds of millions of vehicles. Given the above, a centralised processing architecture would not be viable in large systems including cars due to the prohibitive cost and questionable viability of the back-end systems that would be required.
Cost Reflective - A distributed architecture minimises the fixed cost element required of the back-end system, such that the total systems cost is more a function of the number of vehicles (OBE). This is particularly important when considering the applicability (i.e. cost effectiveness) of the system to smaller national deployments.

One difficulty however with on-board map matching is the size of the maps which are required to be downloaded to the OBE. For example, a map of routes in London alone could be in the order of megabytes. Such maps will also require updating.

The invention is defined in the independent claims, to which reference should now be made. Advantageous embodiments are set out in the sub claims.

According to one aspect of the invention there is provided vehicle on-board equipment implementing at least one route usage evaluation scheme in use, including: vehicle position means configured to provide vehicle position data; map storage configured to hold one or more maps; map matching means configured to receive vehicle position data from the vehicle position means and map data from the map storage and to match the vehicle position data to the map data and thereby determine route usage data; and communication means configured to receive data for route usage evaluation and transmit it to a back-end system; wherein the on-board equipment is configured to switch between an off-board map matching mode, in which the data received and transmitted by the communication means is changing vehicle position data from the vehicle position means, and an on-board map matching mode in which the data received and transmitted by the communication means is route usage data from the map matching means.

Surprisingly, the inventors have found that the optimal solution is to provide both an on-board map matching mode and an off-board map matching mode in the OBE. In particular, on-board map matching can be disadvantageous when it is not possible or prohibitively expensive to download a map (data transfer cost). In such a case the OBE can function in off-board map matching mode even if map-matching is provided for in the OBE.

The ability to provide both off-board and on-board map matching also allows for the provision of more flexible route usage evaluation schemes. For example, such a scheme running in Scotland where there are dense centres of population as well as sparsely populated zones could use off-board map matching for the densely inhabited regions and on-board map matching for the less populated zones. This could give the best possible combination of factors for data transmission.

Moreover, provision of on-board and off-board map matching allows an OBE to function in a variety of different schemes. For example, a scheme suitable for off-board map matching may be provided in Germany whereas one suitable for on-board map matching may be provided in Austria. The OBE according to preferred embodiments of the invention would be able to switch between these two modes as appropriate.

According to invention embodiments, map storage is available, probably in the form of non-volatile flash memory. Memory may also be reserved and configured to hold at least one relevant territory definition for the or each scheme. Thus preferably a scheme territory means is configured to hold at least one relevant territory definition for the or each scheme.

This definition is separate from any map and merely defines the extent of a territory. Once the vehicle has exited a certain territory it may not perform route usage evaluation. Alternatively, it may directly enter another scheme territory and thus implement a different route usage evaluation scheme. The use of a scheme territory definition held on-board the OBE is a simple method of detecting whether the OBE is within a scheme. Prior art methods, on the other hand, involve cameras (such as the ring-fence of cameras around the London congestion zone) or beacons, both of which methods involve costly infrastructure.

Preferably, the OBE includes an identification means which is configured to recognise which scheme if any to implement by comparing the vehicle position from the vehicle means with the territory definition for the or each scheme.

The communication means can use wireless technology, or a smartcard interface for a smartcard that is inserted first in the OBE and then in a remote reader. Many wireless communication protocols are available and potentially suitable for implementation in the communication means, for example cellular wireless communication such as GSM (SMS, CSD), GPRS, EDGE, UMTS (3G), and HSDPA. Alternative technology is available. This could be wifi (a/b/g etc.), wimax; microwave (DSRC, up to 60+ghz which is mm microwave); private packet radio (AGPS etc.); bluetooth (although this technology appears unsuitable); rf (i.e. narrow band rf as exhibited in the Trackers stolen vehicle system); and satellite (i.e. uplink, which might be used for trains/trucks).

Preferably the communication means is configured with wireless technology. GSM is currently preferred for the reasons highlighted elsewhere. GSM and similar protocols use network addresses and thus the OBE is preferably configured to hold a network address of the back-end system for each scheme, wherein the communication means is configured to use the addresses to communicate with the back-end system of the scheme to be implemented.

When a vehicle moves between different countries, the communication means will usually be required to be configured to communicate with different mobile network operators in the GSM technology. The boundaries of the mobile network may or may not correspond to the territorial extent of the route usage evaluation scheme. In any case, for an OBE which can operate in several different countries, there are likely to be a plurality of route usage charging schemes. The same may apply to a number of schemes in different areas in the same country. Preferably, the OBE is configured to implement a home scheme and at least one visited scheme.

Data for the home scheme is likely to be already downloaded onto the OBE on supply. However, in order for the OBE to recognise that it is within a visited scheme, the scheme territory definition for that scheme is required. Thus preferably, the scheme territory means is configured to hold any relevant territory definition for each scheme. Advantageously, the network address for any visited scheme back-end system is held within memory on the OBE. The network address may be provided by the visited mobile network operator (MNO) or the home MNO or previously downloaded.

Route usage evaluation schemes are designed to implement either off-board or on-board map matching. However, in certain circumstances it will be appropriate to use off-board map matching for an on-board map matching scheme. The inventors have realised, for example, that if a vehicle roams to a map-matching scheme infrequently or for only short periods of time, it may be inefficient in terms of data transmission to download the visited map. There is a trade-off between the increased regular data transmission for off-board map matching and the one-off transmission of a large map. Accordingly, an OBE is preferably configured to download a map for a scheme from the back-end system and subsequently switch from off-board to on-board mode for that scheme according to one or more predetermined criteria. The predetermined criteria preferably relate to data transmission and/or storage issues.

The predetermined criteria may be, to list a few examples, any combination of the size of a map, the cost of the various data transmission possibilities, the number of visits to a territory, the time the vehicle has spent within a territory and the memory available. All of these factors have data transmission implications. For example, in the case of number of visits to a territory, it may not be worth using an on-board mode with attendant map download, unless the vehicle visits the territory frequently.

The different schemes may be held in memory as separate applications or as one application for all the schemes with multiple scheme-definitions. It is envisaged that the preferred alternative is a single application and that the OBE is configured to load the appropriate application and optionally one or more maps to implement the scheme.

Each application may include scheme data such as charge per distance travelled, timing factors for charging, vehicle classification etc. The application may also determine the frequency of the data transmitted to the back-end system.

The route usage evaluation scheme may relate to a number of applications, in particular pay-as-you drive insurance, automated tachometer data collection, lorry tracking, vehicle route analysis and customs enforcement. However the preferred use is in road user charging. Preferably therefore, the scheme territory definition defines a charging area. More preferably, the map matching means is configured to use scheme parameters, wherein route usage is determined as charge coded distance. The charge coded distance may be an actual figure in monetary units or may require further processing by the back-end system to arrive at a monetary value. For example, the charge coded distance may include a distance and a code for the tariff to be applied dependent on the area and/or time that the distance is travelled.

Preferably the map matching means is configured to accrue charge coded distance and send it to the communication means in batches.

The inventors have come to the realisation that, in most systems it would be advantageous to provide the user with additional information other than just a charge so that the user can quickly recollect why the charge might have been levied. For example in a congestion zone scheme, such information could be the point and time of entry and exit into and from the zone.

Such information has not been previously required in the prior art pre-pay systems such as Toll-Collect.

According to preferred embodiments the map matching means is configured to provide a statement credibility record. The statement credibility record may list route usage temporally or by reference to named routes or other points of reference.

Preferably, the communication means is configured to send the statement credibility record to the back-end system with the route usage evaluation data.

The previous paragraphs relating to map matching address on-board map matching and the map-matching means is included within the OBE's route processing means. For off-board map matching, an OBE also requires route usage processing means functionality. Processing is necessary to reduce the data produced by the vehicle position means into a form suitable for transmission to a back-end system and indicative of route usage.

For this purpose, an OBE preferably includes a route summarisation means and route log means storing the summarised route for off-board map matching. The route log means is preferably configured to hold the summarised data until it is transmitted to the back-end system. Preferably, the communication means is configured to upload data from the route log means at regular intervals for off-board map matching.

When an OBE encounters a scheme, it must use the off-board mode unless there is a map available in the map means for the scheme. As set out previously, it may be that a map is available for the scheme in question but not (yet) downloaded onto the OBE. This may be due to lack of memory available. Preferably an OBE is configured to delete a selected map held in the map means in order to download a new map. The least used map may be deleted. This can allow the OBE to use the map-matching mode where appropriate, despite the limit on the memory available in the OBE.

According to a further aspect of the invention there is provided a back-end system arranged to operate at least one route usage evaluation scheme, for vehicle on-board equipment (OBE) in use, including: a communication unit configured to receive data for route usage evaluation for the route usage evaluation scheme from on-board equipment; and transmit updates to on-board equipment and a billing unit configured to produce bills for each on-board equipment according to the route usage evaluation data; wherein the route usage evaluation data is changing vehicle position data received from on-board equipment operated in an off-board mode, and route usage data resulting from a map matching process performed by on-board equipment operated in an on-board mode.

There is also the issue of updating schemes, maps etc. Preferably, the communication means is configured to poll the back-end system (preferably the home back-end system) periodically to ascertain if updates are available.

Correspondingly, a preferred back-end system needs to manage updates. The back-end system may comprise a flag unit which sets a flag whenever data is required to be downloaded to an OBE.

The flag unit may simply wait for a poll if the GPRS/UMTS type system is implemented. Alternatively, a flag unit might instigate communication with the OBE. In either case it is advantageously the back-end system which manages updates and the transmission of new scheme data. Preferably the back-end system is configured to propagate the updates to OBE in a fashion which is staggered over time to avoid network overloading.

Advantageously, a parameter in the flag unit is provided to indicate the urgency of data required to be downloaded. In the GPRS/UMTS system, the communication unit may also use an additional messaging system to contact OBEs proactively as necessary.

For enhanced data management, updates may be downloaded ahead of a go-live time and date stamped. Moreover, preferably only the most recently updated portions of updated data are downloaded.

Both determining whether a vehicle is within a territory and remote querying of vehicle usage can be important elements of a route usage evaluation means. For the avoidance of doubt, it is emphasised that any or all of the following features relating to these later features can be combined with any or all of the features of embodiments in this section to form further embodiments.

### Determining Whether A Vehicle Is Within a Territory

### Prior Art

Current route usage evaluation schemes (generally road user charging schemes) could use GPS or another satellite navigation system to determine whether a vehicle is within a territory, for example a charging zone.

For instance, the present congestion charging scheme in London could be implemented using GPS rather than the system of fixed infrastructure cameras currently in use. The use of GPS would eliminate the costly physical infrastructure required to construct a "ring fence" of cameras which monitor the outside of the congestion charging zone. In essence, once the vehicle position is determined using GPS, it can be compared (on-board or off-board) with the extent of the charging zone.

For a successful GPS implementation, accurate position determination is necessary so that it is clear whether the vehicle has actually entered the charging zone.

This can be a problem in many circumstances, in particular because GPS provides a locus of position, not a precise position. As will be appreciated by those skilled in the art, the GPS error circle is determined by the number of visible satellites for navigation; multi-path reflections, for example off adjacent buildings; atmospheric conditions; and systematic errors such as satellite clock errors etc.

This error circle can increase significantly in dense "urban canyon" type environments in which the presence of tall and/or reflective buildings may serve to reduce the view of the sky and hence limit the number of satellites visible; increase the incidence and effect of multi-path reflections; and disrupt the continuous tracking of a given sub-set of satellites, with course changes taken by the vehicle necessitating a switch to a different sub-set.

A large error circle may lead to the GPS position indicating that a vehicle is within a charging zone when it is not or vice versa. For instance, a vehicle may be travelling on a road outside a charging zone. However, position error might occasionally position the car inside the zone. If there are also multi-path reflections from tall buildings, the track of the vehicle might be "shifted" so that it appears wholly within the zone. Additionally, there could be a loss of fix. Although some assumptions are typically made to estimate a car's position even when there is a loss of fix, such assumptions cannot substantiate its position within the zone to the user if there is a query.

One internal suggestion to overcome the difficulties associated with the GPS error circle is a "buffer zone" extending from the outside of the charging zone inwards. While a vehicle's position is determined to be within the buffer zone, there would be no charging unless it subsequently could be shown to be within the area of the charging zone to the inside of the peripheral buffer zone. Such a buffer zone would be of differing width depending on location and the GPS error circle at that location. It could have a width of several hundred metres in many places.

Limitations of this related art approach include the increased requirement for data to indicate the necessary width of the buffer zone, the necessity to over-provision the buffer zone (due to temporal variation in GPS error circles as a result in the changing satellite constellation) and user confusion which may result as to when charges might actually be levied. Perhaps more importantly, if a vehicle can only be proven to be in the buffer zone without entering the central area to the inside of the buffer zone, then revenue for entry into the charging zone may be lost even if the vehicle did indeed travel within the charging zone.

It is also known to provide an on-board unit (usually referred to as on-board equipment herein since there may be more than one structurally separate part) with memory for storing maps and processing means for matching data from a GPS sensor, for example, to the map. However, there is no other need for a map if charges are levied solely according to whether the vehicle is within the zone, irrespective of distance traveled.

It is desirable to overcome or at least mitigate the above problems inherent in determining whether a vehicle is in a territory.

In some embodiments of the invention, the vehicle on-board equipment (OBE) previously described may be configured to implement at least one route usage evaluation scheme having a territory with a surrounding border. The map matching means may thus be configured to receive data from the vehicle position section and the map storage and to match the vehicle position data to the map and thereby determine whether the vehicle is within the territory; and the map storage may be configured in use to hold at least one map in the form of information corresponding only to routes within a readiness zone extending along the territory border.

Implementation of a readiness zone with a corresponding map allows the OBE to determine vehicle position more accurately by reference to both the map and the vehicle position means. There is no requirement for a large buffer zone because the position fix is inherently more accurate. Moreover, a map corresponding to routes in a readiness zone only does not present a significant overhead in terms of memory required in the OBE. Once the vehicle has been identified as definitely inside or outside the territory using the readiness zone, it can be assumed to remain inside/outside until it is matched to a position within the readiness zone again.

Therefore, advantages of these embodiments of the present invention include elimination of the infrastructure necessary for manual, for example, camera checking of a territory border and elimination of the survey costs necessary to set up a buffer zone having a width suitable for spatially and temporally changing GPS error circles. Additional advantages over the buffer zone idea are the reinstated clarity of the extent of the territory to users and the fact that there is no obvious loss of revenue to the operator such as would occur with use of a buffer zone.

The vehicle on-board equipment may have a vehicle position means configured to employ sensors for externally transmitted signals including DSRC (Dedicated Short Range Communications), radio station signals, cellular telephone signals and/or satellite signals, such as GPS signals. Alternatively or additionally, the vehicle position means (or positional sensor section) may be configured to employ at least one sensor for on-board signals.

Preferably, the vehicle position means is configured to employ a combination of at least one sensor for externally transmitted signals and at least one sensor for on-board signals. More preferably, these are a combination of a satellite navigation sensor, particularly a GPS sensor, and a gyro and/or magnetometer.

There may also be provided a sensor for a wheel speed indicator and/or a CAN-bus interface and/or an accelerometer. Thus in addition to the previously mentioned directional sensors, a wheel speed indicator may be used to provide an accurate determination of the distance driven. The wheel speed indicator or tacho is the only sensor that can "fix the vehicle to the ground" and is therefore less susceptible to drift than the direction sensors. The most likely derivation of wheel speed is via the vehicle CAN-bus. However this data is only available on relatively new vehicles and its incorporation would complicate the OBU installation.

The gyro and magnetometer both provide heading determination independently from any GPS or other satellite system. The gyro can measure angular acceleration so that from a known GPS starting heading, a series of future dead-reckoning headings can be determined (via integration of angular acceleration). The magnetometer measures heading and is time independent, but its accuracy can be affected by its presence in the vehicle and corrections for asymmetry may be necessary

Use of the combination of sensor for external signals and directional sensors for on-board signals augments the remote based system with dead-reckoning sensors and enhances positional accuracy. Any such dead-reckoning sensor data may be combined with the satellite data for billing validation where the territory is a charging zone as explained in a later section.

The readiness zone extends along the territory border. It could extend from the border itself to one side or the other. Preferably, however, the readiness zone is an area extending along the entire territory border to either side of it for a predetermined width. The width can vary along the border and be as little as ten metres or up to several hundreds of metres where appropriate, for example, where there are a multitude of routes or tunnels/bridges.

Multiple territories may be set up within a single route usage evaluation scheme. For example, there may be nested territories in a city charging zone with inner territories having a higher charging rate. In these cases a readiness zone may be provided for each border.

The map storage stores at least one map in the form of information corresponding to routes within a readiness zone as previously defined. For example, a complete map of routes within the readiness zone may be provided. According to one preferred embodiment, the information is as to each entry point on a route into the territory. Thus where a route crosses into the territory the map holding means stores details of that entry. This reduces memory requirements whilst having no substantial effect on the accuracy of the system.

It should be noted that the word "entry" is used here but is intended to refer to both entry and exit points. For the sake of completeness it is noted that an entry point is usually also an exit point and vice versa. However in the case of one-way systems this will not be the case.

Preferably, the map storage (holding means) is configured to store vectors in the form of a through vector for each entry/exit. The through vector may be a combined vector, which is used herein to include a single vector or a combination of single vectors where the end of one vector forms the start point of the next vector. These combined through vectors are well suited to describing route geometry and are sometimes referred to as polylines. Such a polyline may be in the form of a series of coordinates, with some or all coordinates having one or more associated parameters such as proximity, heading changes or distance.

It can be useful for user verification if each entry/exit point is identifiable on a statement. Thus preferably, the map storage is configured to store route vector descriptors for the through vectors. These can be, for example, a code corresponding to a road descriptor (e.g. road name) which is held in the back-end system or a road descriptor itself.

For additional accuracy in the system, it may be advantageous to store information for routes which do not cross into the territory. For example, there will be improved certainty if the OBE can determine that the vehicle is on a road which does not cross into the territory. Therefore the map storage means is preferably configured to hold vectors in the form of exception vectors for routes which do not cross into the territory. These exception vectors are stored and handled in the same way as the through vectors described above.

Use of vectors as set out above allows further reduction in memory requirements and simplifies the map matching process.

The map matching means preferably matches the vehicle against vectors. More preferably, the map matching means (or map matching processor) stops matching against a vector when a high confidence level is achieved, the readiness zone is exited, or a more appropriate vector is available. The map matching means advantageously is configured to check the vehicle position against all of the combined vectors in a certain proximity. Suitable matching algorithms are known to the person skilled in the art.

Preferably, the map matching means is configured to use information from the directional sensors for on-board signals to determine heading. This is especially valuable because heading is not directly derivable from GPS or other satellite systems but is particularly useful information for matching against vectors.

Preferably the OBE includes a man/machine interface configured to indicate information to the user about the vehicle's position with respect to the territory. A man/machine interface may be in the form of a simple audible or visual signal such as a light or alarm or more complex displays may be provided with the capability of displaying messages such as "charging zone entered" or "no charge on weekends".

The OBE may include scheme territory storage configured to hold at least one relevant territory definition for the or each scheme (or this definition may be stored solely in the back-end system). The relevant territory definition may include a set of coordinates defining a polygon ring-fence.

The OBE is often required to transmit data for route usage to a back-end system (or data centre). This can be by means of a smart card inserted into an appropriate smart card reader in the OBE and then an external reader, or using other forms of communication, for example wireless communications (as previously listed). Preferably, therefore, the OBE includes a communication section configured to transmit route usage data and other data to a back-end system.

The route usage data may indicate the time of entry and point of entry of the vehicle, time spent in the territory and/or distance travelled within the territory, depending on the scheme implemented.

Validation of data can be an important element of any route usage evaluation scheme. This subject is described in more detail in the following section directed to an evidential log. For the sake of certainty it is noted that an OBE as described in the foregoing can include any or all of the features of the evidential log description set out later. In particular, it may include an evidential log means storing selected and/or summarised data from the vehicle position means for retrieval of route usage data over the communications section. The summarised data may include, for example, data from at least one directional sensor for on-board signals and from the remote navigation system.

Each route usage evaluation scheme will have a number of OBEs which communicate with a back-end system or data centre. According to some embodiments of the present invention, the back-end system may be arranged to operate at least one route usage evaluation scheme having a territory and a readiness zone extending around the territory border, for vehicle on-board equipment: its communications unit may thus be configured to receive data for route usage evaluation for the or each scheme from on-board equipment including entry information corresponding to routes in the readiness zone entering the territory; and its billing unit may be configured to produce bills including entry information.

Preferred features of the back-end system in these embodiments correspond to equivalent features of the vehicle OBE. Thus, for example, the entry information may be in the form of route vector descriptors.

As described hereinafter, validation of route usage is an important factor. Therefore any or all the features of the back-end system described with respect to validation of route usage can apply to the back-end system as variously defined hereinbefore. For example, the back-end system may further comprise a validation unit configured to receive billing challenges for a certain time period, request summarised data from the OBE in question for that time period via the communications unit and reconstruct the route travelled in that time period using a map matching unit. The map matching unit may contain similar algorithms or identical algorithms to those present in the OBE for map matching.

### Remote querying of vehicle usage

### Prior Art

For a road user charging system to be acceptable to the public, in the event of a challenge as to the charge levied, the system should be capable of producing sufficient evidence to either validate the bill as correct or uphold the challenge. The same applies to other schemes such as pay-as-you-drive insurance, in which it should be possible to verify the basis on which the insurance cost is calculated.

One prior art road user charging scheme includes a way of showing to the user that a given charge was correctly levied using cameras. In the London congestion scheme, a photograph of the vehicle's number plate entering the congestion zone is available as evidence. In other schemes, such as the Toll-Collect scheme operational in Germany, suitable evidence could be electronic records from the gantries that check for payment. These also rely on cameras to identify lorries that have not paid.

A system which cannot produce such evidence could make the road user scheme difficult to enforce and encourage users to abuse the system by making challenges. In the worst case scenario this tendency, probably encouraged by the media, would result in excessive costs in processing the challenges or in lost revenue as a result of waived charges.

A difficulty here is that the requirement to obtain such evidence should not present a significant operating cost because once the scheme has been accepted, the percentage of user challenges in most schemes is observed to be low.

Another difficulty is security of the evidence. It is important to prevent malicious obstruction or manipulation of the evidence, especially because the user will have prior knowledge of the intention to challenge that the road user scheme operator will not have.

It is desirable to overcome or at least mitigate the above validation problems.

According to some embodiments of the invention, the vehicle on-board equipment configured previously described includes route usage processing means configured to process vehicle position data from the vehicle position means into a form indicative of route usage and suitable for transmission to a back-end system; evidential log means configured to store unprocessed selected and/or summarised evidential data from the vehicle position means for retrieval by the back-end system; and communication means configured to transmit data to the back-end system for the or each scheme.

These embodiments of the invention use unprocessed selected and/or summarised evidential data directly from the vehicle position means which is stored in an on-board evidential log means for retrieval by the back-end system. This storage of summarised/selected unprocessed data on-board has a number of significant advantages over the prior art camera methods. Firstly, there is the obvious advantage of eliminating costly infrastructure. Secondly, it can allow re-creation of data indicating a route usage at the back-end without costly overheads in terms of excessive memory use on-board or excessive transmission. Thirdly, it can be employed in schemes where camera methods are unsuitable.

Another use of the evidential log means is in protection against organised fraud by manipulation of the processed data regularly sent to the back-end system. If a spot check reveals discrepancies between this data and the evidential data, it is a pointer to frauds. For example, if the processed data shows a short trip in one location but the GPS data in the evidential log shows a GPS satellite constellation not visible in that location, then this may indicate a fraud. Such functionality is not available from prior art system.

When the data is processed to prepare it for transmission to the back-end system, a large volume of raw data is distilled by a number of processing stages into a much smaller result. This is true in both on-board map matching and off-board matching systems. Even in the off-board matching mode described earlier in which the route usage evaluation data is changing vehicle position, individual items of data such as, for example, individual satellite data from the GPS sensor or magnetometer readings which occur at every hundredth of a second will be lost. With use of the previously described route summarisation as part of the route usage processing means, data loss due to processing increases.

This data loss is higher when in an on-board map matching mode, in which the route usage processing means includes map matching means to determine route usage.

The data transformation is irreversible. The result sent to the back-end system can be generated from the raw data but it is not possible to regenerate raw data from the result.

Therefore, in a completely electronic system as proposed with no external infrastructure for charge verification, either the information sent to the back-end system must be suitable for rebutting challenges without further communication or there must be an alternative method. According to these invention embodiments, at least some of the original information is held in the OBE for evidence when a remote query is received from the back-end system.

Advantageously, these embodiments of the invention provide for the reconstruction of the charge calculation using raw input data from sensors, which is itself available for scrutiny. This is especially important should the efficacy of the algorithms used to convert the raw data into route usage data be challenged.

As mentioned earlier, security is an important requirement of a charge validation method and the evidential log means can be protected in various ways which the skilled person will appreciate. Advantageously, the evidential data is held in an encrypted version. More preferably, PKI security is used to encrypt the data using a private key specific to the OBE.

The communication means can be configured to transmit both evidential data and processed data, preferably according to different criteria. Advantageously, the evidential data is only transferred to the back-end system when a remote request is received from the back-end system. In contrast, the processed data is advantageously transferred at predetermined intervals to the back-end system. For example, in an off-board matching mode, the data may be transferred at regular intervals, for example at the end of the day or in "near real time". Less data is generally required to be transmitted from an on-board map matching system and therefore it may be transmitted at less frequent intervals. Naturally, the intervals may be pre-determined by factors other than timing. For example, movement of a vehicle into a different territory could trigger transmission of the last chunk of processed data for the old territory.

Memory is required in the OBE for the storage of evidential data. Such non-volatile memory may be used for an evidential log means (or evidential log storage and processor).

The evidential log means is preferably configured to hold the evidential data indexed by time in a wrap-around buffer to overwrite the oldest data when the memory is full. The time index may use the OBE RTC which is synchronised regularly with GPS time.

Since data is written on a first-in first-out basis, oldest evidential data is overwritten first. Thus memory provisioning, which is determined at the time of manufacture, determines the evidential storage capacity and the "grace period" allowable to the user in which a challenge can be issued. This writing of cut-down data to a log which is slowly overwritten provides for the often significant delay between the route usage data being produced and the user registering a challenge. For instance, with monthly billing, it may be perhaps two months before the challenge is received at the back-end system.

The evidential log according to these embodiments of the invention is also resilient to communication delays caused by restricted network bandwidth, the vehicle being out of GSM or other protocol coverage for extended periods (for example garaged) or abroad (where avoidance of roaming cost policies may apply).

Preferably, the evidential log allows data to be write-protected selectively. Thus the evidential log means may be configured to write protect evidential data for a predetermined time period as an evidential parcel if a remote request is received for that period. This provides an opportunity to "stop the clock" for a piece of evidential data and prevent overwriting.

The evidential parcel can then be uploaded to the back-end system by the communication means. The advantage of a separate write protect followed by an upload is that the evidential parcel can be transferred at a suitable time, for example when network usage is low and/or cheap, without the chance that the data will be lost in the meantime.

Advantageously, the evidential log means is configured to remove the write protect from an evidential parcel once it has received an indication that the evidential parcel has been processed by the data centre. This releases the memory used back into the storage pool.

The vehicle position means may be configured to provide data from one or more sensors. Preferably the vehicle position means is configured to provide data from more than one sensor. Particularly in city charging environments, a single, for example, satellite sensor can prove insufficient in terms of precision and availability for road user charging and must be complemented by additional sensors.

Advantageously, the vehicle position means includes at least one sensor for externally transmitted signals (such as GPS or other satellite signals, radio or cellular phase signals) and/or at least one sensor for on-board signals. The sensor required depends on the scheme to be implemented. For example, in a pay-as-you-drive insurance scheme, an accelerometer only could be used and route usage data would depend only on acceleration to show driving habits. In this case, changing vehicle position data would be in the form of acceleration data.

Preferably there is provided a GPS sensor giving GPS position data and associated timing information. Alternatively or additionally the vehicle position means may include directional sensors for on-board signals in the form of a gyroscope and/or magnetometer and/or CAN-bus data link and/or accelerometer and/or other sensor (such as a "trailer connection" switch for use in charging haulage tax).

Data from the sensors mentioned is the raw input to the processing algorithms that the OBE uses. It is necessary to reduce this raw data as it would be unacceptable to send all the raw data to the back-end system both in terms of cost and network bandwidth.

These embodiments of the present invention achieve reduction of this quantity of data by selection and summarisation.

Sensors can generate hundreds of data points per second (rather than just one per second as is the case for GPS). Moreover, additional GPS parameters beyond position, heading, speed and time are sometimes used in advanced position determination algorithms. To further complicate the situation, dead-reckoned position determination is both temporal and spatial. The processed data determining the position might use any some or all of the above inputs and that input set might change on a second by second basis. Thus the evidential log means may be advantageously configured to store data from all the available sensors. Selection and summarisation is clearly important in these circumstances and can be achieved in any combination of the following ways.

Preferably, gyroscope and/or magnetometer data may be integrated to a series of temporal spaced heading statements, for example one per second. The evidential log may also be configured to integrate the CAN-bus data to provide a series of temporarily displaced cumulative distance statements (configured with other data as necessary).

Furthermore, the evidential log means may be configured to remove superfluous data. These may be GPS components (for example relating to satellites not used in a certain position determination) or unwanted data from sensors detaching on-board signals. Furthermore, once the gyroscope and/or magnetometer and/or CAN-bus data has been integrated (and/or even beforehand), the evidential log means can be configured to remove superfluous data originally used for the integration.

As an additional input, the evidential log means may be configured to include information as to sensor events, such as tampering (power disconnection etc.) and loss of GPS fix. Atypical loss of GPS fix may be particularly important, because it could indicate tampering.

As mentioned previously, each route usage evaluation scheme will have a number of OBEs which communicate with a back-end system or data centre. In some embodiments of the present invention the back-end system previously described includes a validation unit configured to receive billing challenges for a certain time period, request evidential data from the OBE in question for that time period via the communications unit and process the data, for example by reconstructing the route travelled in that time period using the map unit.

In one embodiment, the validation unit is configured to use corresponding algorithms to those of the map matching means in the OBE to reconstruct the route travelled. More preferably, the algorithms are the same as those used in a map matching means. In such an embodiment, the user may be sent, or have access to, a reconstructed route shown on a map as an aide-memoire.

Preferably, the validation unit is configured to compare the reconstructed route with bills produced by the billing unit.

In another embodiment, the validation unit merely processes the data to place it in an easily viewed form for manual checking.

Preferably, the validation unit is configured to first indicate the challenged time period to the OBE and subsequently request summarised data for that time period, with the advantages mentioned above.

The communications unit may be configured to receive the summarised data as an encrypted evidential parcel and the validation unit configured to decrypt an encrypted evidential parcel. The skilled person will be aware of various appropriate encryption algorithms.

### Implementation

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites on the vehicle or in the back-end system and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

Test scripts and script objects can be created in a variety of computer languages. Representing test scripts and script objects in a platform independent language, e.g., Extensible Markup Language (XML), allows one to provide test scripts that can be used on different types of computer platforms.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

### General Method and Program Aspects

A method according to preferred embodiments of the present invention can comprise any combination of the previous apparatus aspects. Methods according to these further embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

In general the hardware mentioned may comprise the elements listed as being configured or arranged to provide the functions defined. For example this hardware may include at least one sensor, memory, processing, and communications circuitry for the OBE and memory, processing and communications circuitry for the back-end system.

### Invention Embodiments

Elements of the invention have been described using the terms "means" and "unit". The skilled person will appreciate that such terms and their equivalents may refer to parts of the OBE/back-end system that are spatially separate but combine to serve the function defined. Equally, the same physical parts of the OBE/back-end system may provide two or more of the functions defined.

For example, separately defined means may be implemented using the same memory and/or processor as appropriate.

Preferred features of the present invention will now be described, purely by way of example, with reference to the accompanying drawings, in which:-
**Figure 1** is a schematic diagram showing an OBE according to one preferred embodiment;
**Figure 2** is a schematic diagram showing a back-end system according to another preferred embodiment;
**Figure 3** is a flow diagram of a method in an OBE according to invention embodiments;
**Figure 4** is a schematic diagram showing an OBE with functionality that may be used in a preferred embodiment;
**Figure 5** is a schematic diagram showing a readiness zone and a route in a readiness zone;
**Figure 6** is a schematic diagram showing a back-end system with functionality that may be used in a preferred embodiment of the invention;
**Figure 7** is a flow diagram showing a method in an OBE which may be used in an embodiment of the invention;
**Figure 8** is a flow diagram showing a method in a back-end system which may be used in an embodiment of the invention;
**Figure 9** is a schematic diagram of an OBE with functionality that may be used in a further embodiment of the invention;
**Figure 10** is a schematic diagram of back-end system components with functionality that may be used in an embodiment of the invention;
**Figure 11** is a flow diagram showing a method which may be used in an embodiment of the invention in an OBE;
**Figure 12** is a flow diagram showing a method which may be used in a back-end system according to a preferred embodiment of the invention;
**Figure 13** is a schematic diagram illustrating the processing algorithms of an OBE according to a preferred embodiment;
**Figure 14** is a schematic diagram showing the processing algorithms of a back-end system according to a preferred embodiment;
**Figure 15** is an overview of OBE software architecture;
**Figure 16** is a schematic of the superset of OBE functionality according to preferred embodiments; and
**Figure 17** is a schematic diagram of two OBE implementations.

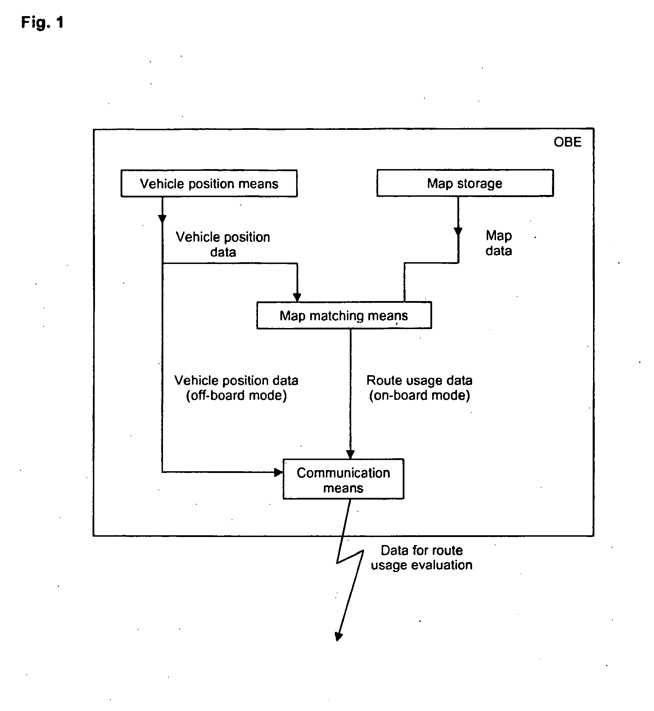

Figure 1 shows the major relevant parts of an OBE according to a first preferred embodiment. The other components may be implemented as described in the remaining parts of the specification but are omitted here for simplicity. The same comments apply analogously to the other schematic diagrams presented herein. As shown in figure 1, both map data and vehicle position data are used in the map matching means to produce route usage data in an on-board mode. The vehicle position data is used on its own in the off-board mode and thus the map matching means is inoperative. The communication means receives either the vehicle position data or route usage data as the case may be and communicates this remotely towards the back-end system.

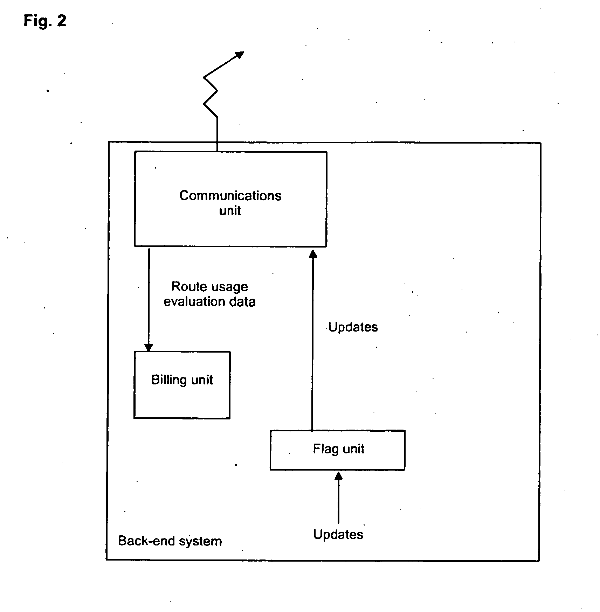

Figure 2 shows a corresponding back-end system additionally including a flag unit which is used to set a flag whenever an update is required to be downloaded to an OBE. A communications unit in the back-end system receives the route usage evaluation data from OBEs and provides bills in a billing unit. The same communications unit sends out updates to OBEs as necessary.

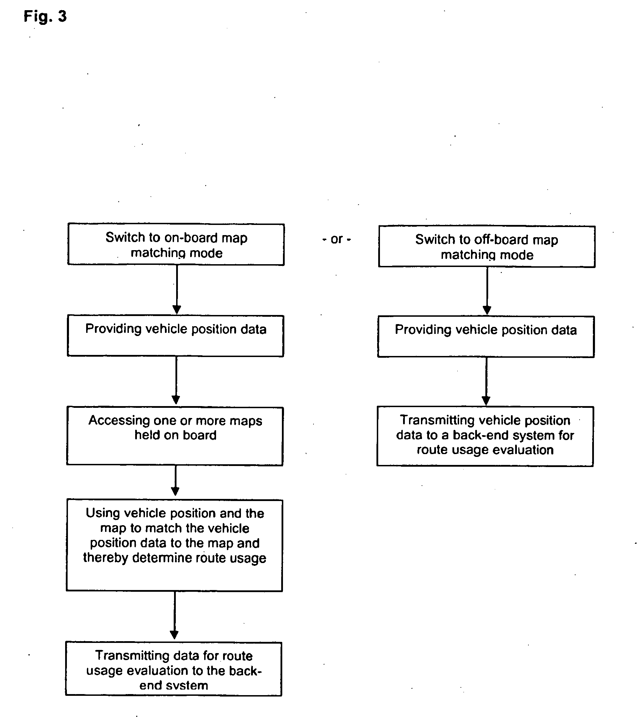

The flow chart of figure 3 shows an on-board method of implementing at least one route usage evaluation scheme in which there is a switch to on-board or off-board map matching mode followed by the steps required by one of these modes.

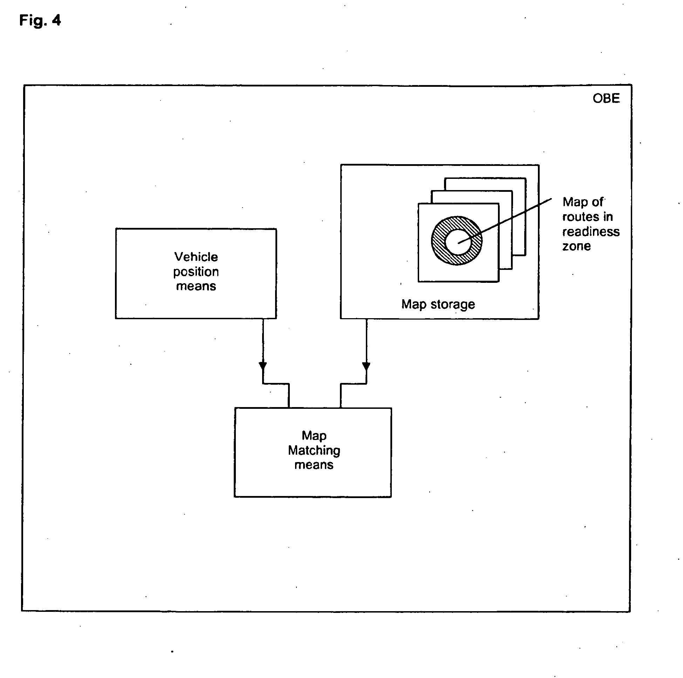

Figure 4 is a schematic diagram of an OBE showing functionality which may be used in a preferred embodiment in which the map storage holds a map solely of routes within a readiness zone extended around the territory border. The vehicle position from vehicle position means is matched against the routes in the readiness zone to determine whether the vehicle is within the territory. Once the vehicle has exited the readiness zone it is assumed to remain to the outside of the readiness zone (in which case it is not within the territory), or to the inside of the zone (in which case it is within the territory of the scheme) until it is detected in the readiness zone again.

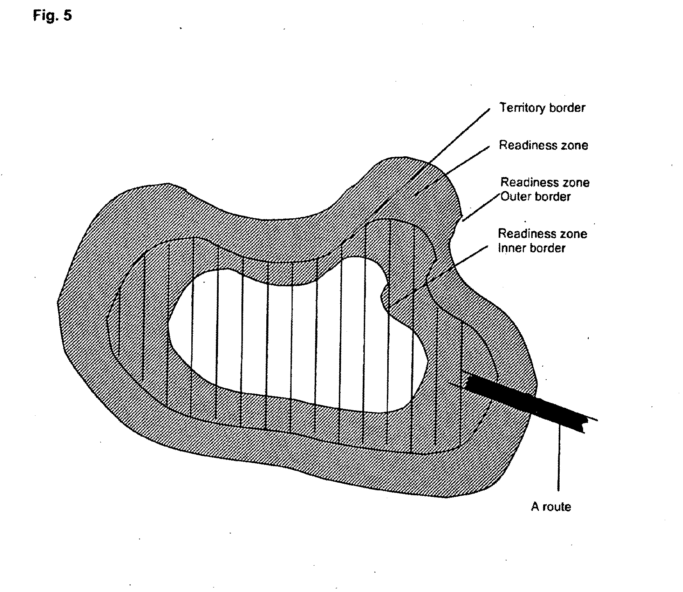

Figure 5 is a schematic diagram showing the relationship between the readiness zone inner and outer borders and the territory border. The readiness zone is of variable width, depending on GPS conditions in that geographical area. A route is shown entering the territory. The map storage holds a vector corresponding to this route and the vehicle position will be matched when the vehicle is within the readiness zone.

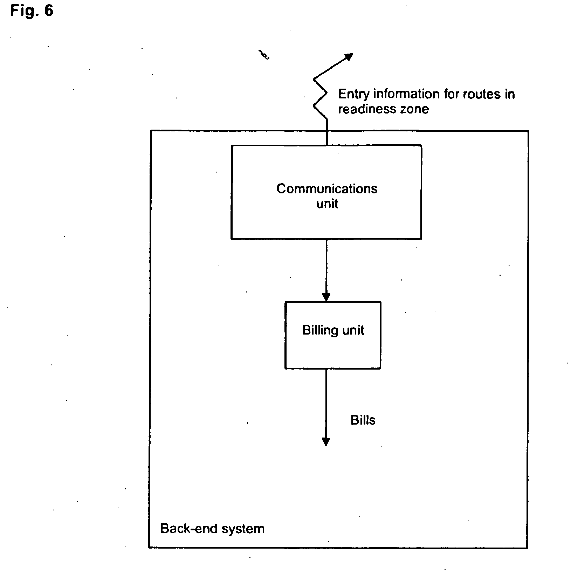

Figure 6 shows a corresponding back-end system with a communications unit which receives entry information for vehicles entering a territory through the readiness zone. This information is sent for billing to a billing unit.

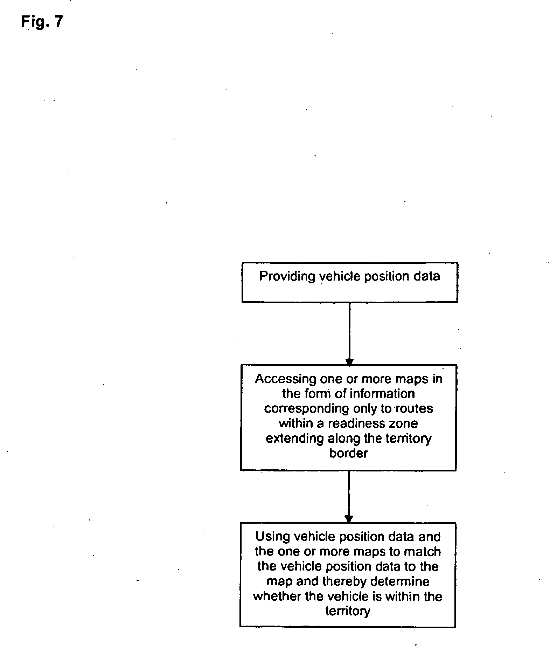

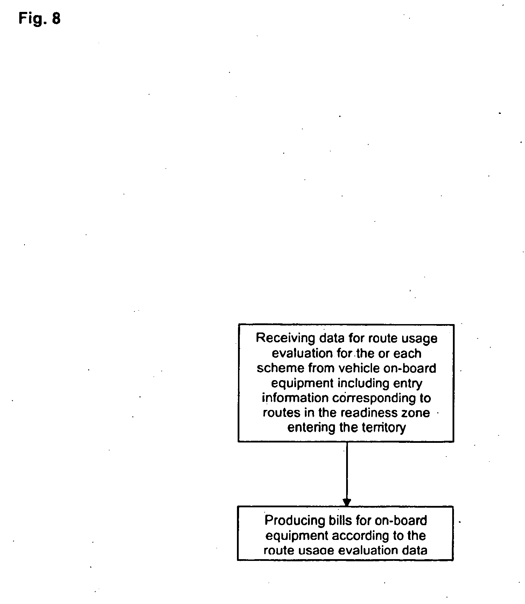

Figure 7 is a flow diagram for the method in the OBE and figure 8 a diagram for the corresponding method in the back-end system in which a readiness zone is used.

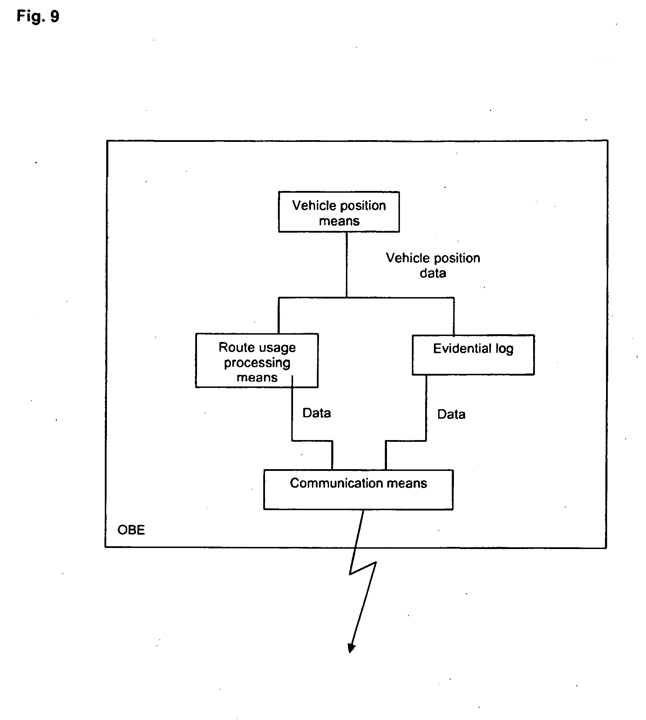

Figure 9 is a schematic diagram showing an OBE with functionality that may be used in an embodiment to allow remote querying of vehicle usage. Such an embodiment allows querying of the bills produced by the back-end system.

Here, the vehicle position means such as GPS sensors pass vehicle position data to a route usage processing means, which could be on-board map matching, or processing and summarisation for transmission to a back-end system and off-board map matching. The vehicle position data is also sent to an evidential log, where it is selected and/or summarised. A communication means is configured to send data from the route usage processing means and from the evidential log to the back-end system.

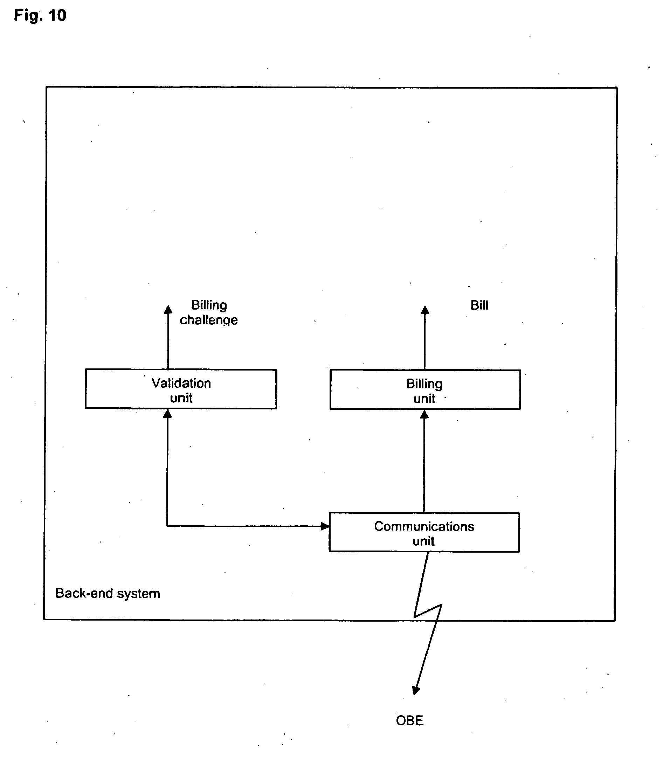

Figure 10 shows a corresponding back-end system with a communications unit receiving data and transferring it to a billing unit if it is route usage data and to a validation unit if it is data received in response to a billing challenge.

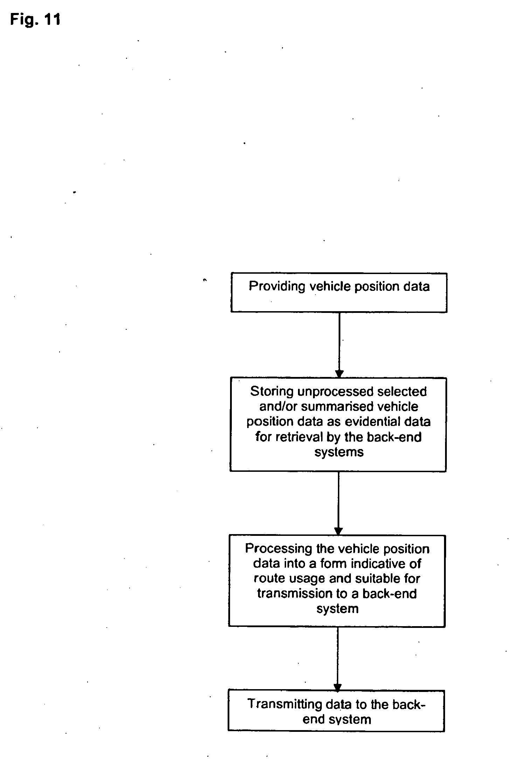

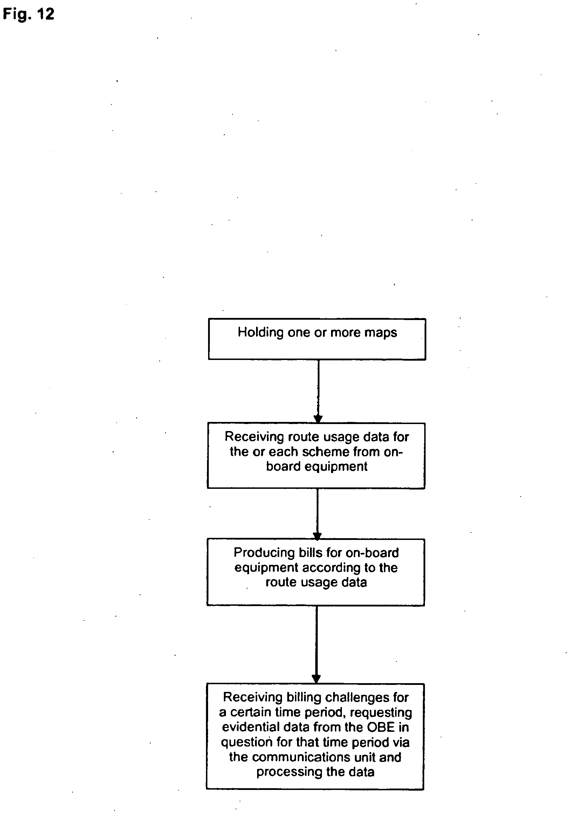

Figure 11 is a flow diagram showings steps in a corresponding process in an OBE. Figure 12 is a flow diagram showing steps in a corresponding method in the back-end system.

The following is a more detailed description of the system components without reference to the particular elements claimed.

### System Overview

The route usage evaluation scheme incorporating preferred embodiments of the OBE and back-end system described herein is a primarily GPS based scheme, and comprises three top-level components:

On-board Equipment (on-board unit or OBE, OBU) - This is the device fitted to every vehicle participating in the road user charging scheme. The OBE is responsible for calculation of the road user charge for each vehicle in the scheme, and communicating the charging data to the back-end system. The OBE may be responsible for communicating status data to roadside enforcement gantries such that vehicles operating without an OBE or without a properly functioning OBE can be identified and appropriate actions taken. Further, the OBE may provide for interaction with the driver by displaying status information, presenting a man-machine interface and/or smartcard facility.

GSM/GPRS Network - In order that the OBE may communicate with the back-end systems and vice versa over the geographical area that comprises the charging scheme, GSM/GPRS communications are preferably employed, at least in Europe. Whilst there are a number of other wireless technologies that might be suitable, these are usually proprietary or country specific. GSM/GPRS is used because of its pan-European coverage (using its inherent network roaming capability) and its high geographical coverage. Also, as GSM/GPRS is a high volume consumer service, it exhibits a comparatively low (and continually falling) price in comparison with other alternatives.

Back-end system (data centre) - The back-end system is responsible for processing the usage data from the OBE community, aggregating it into user bills, and managing the billing process. The back-end system is also responsible for interacting with the OBE to effect all required software and configuration maintenance aspects. The back-end system might also handle customer services and enforcement services activity as appropriate to the contracting structure specific to each individual road user charging scheme.

### Road User Charging Scenarios

There are six generic road user charging scenarios envisaged, forming the basis of any scheme, and it is important to understand the dynamics of each in considering the design of the overall solution.

One or more of the six generic road user charging scenarios summarized below might be combined (into a hybrid scenario) to comprise the fundamental requirements of a given scheme:
Fixed Fee Charge Area - using a polygon "ring fence" to describe the geographical charge area, a fixed charge is levied upon unambiguous determination by the OBE that the vehicle has crossed into the charge area boundary. This is analogous to the current London Congestion Charging scheme, although that particular example uses fixed infrastructure consisting of VRM identification cameras to describe the charge area, not OBE in the vehicles. The OBE need only contain the polygon describing the charge area, and not necessarily any on-board information relating to the roads therein. OBE based solutions should also be expected to provide for an indication of the path of the vehicle within the charge area for the purposes of evidential charge validation in the event of a dispute.

Distance Based Charge Area - Similar to the example above, except that whilst in the charge area the charge is calculated based upon distance driven. The scheme may combine both a fixed entry fee and a distance based fee element. The OBE must clearly therefore be able to accurately measure distance driven within the charge area, and use of an on-board means of driven distance measurement may eliminate any necessity for the OBE to have any information relating to the actual roads.

Total Distance Based Charge - A simple usage based charge levied upon total distance driven, irrespective of geographical location. Again, the use of an on-board means of driven distance measurement may eliminate any necessity for the OBE to have any onboard information relating to the actual roads. Note that in some schemes the total distance measurement may be employed to provide for charging of off-road (i.e. Private land) driven distance.

Motorway Only - A "motorway only" charging scheme seeks to charge vehicles for use of a certain class of roads (i.e. motorways). This is the most prevalent scheme for lorries, as exhibited in the German, Austrian and Swiss schemes. In order to identify the presence of the vehicle on a motorway segment, a GPS or other navigation system must make reference to an appropriate map of the road network. This map may either reside on-board the OBE, or within the back-end system (i.e. off-board the OBE) or both. Further, the distance traveled on the motorway may be used in the calculation of the charge. The distance measurement might be obtained in one of two ways, either directly measured by the OBE or derived from the statutory length of a motorway segment as referenced from the map.

Whilst a motorway only charging system could be applied to any classification of roads, the more rigorous definition of motorway segments (i.e. clear entry and exit points) provides for the most straightforward implementation. Other categories of road (A-roads for example) are more complex given the far larger number of entry and exit points possible for a given section of road.

Motorway and Other Roads - Similar to a motorway only charging scheme as described above, but including multiple road classes each of which might have different charging parameters. As described above, the complexity of the system increases as the number of road categories increases, especially as reliable segment definition decreases significantly for road categories smaller than motorways.

All Roads - An "all roads" charging scheme is essentially combination of a Motorway/Other Roads scheme and a Total Distance Based charge, in which identified roads (such as motorway and other roads) are charged accordingly, and all other driven distance (i.e. on unidentified roads) charged at a different rate. The unidentified road driven distance is simply the total driven distance less that for identified roads.

Note that it is likely that some roads might be classified as "exempt", such that no user charge is levied by the system for their use. Rather than recognize exempt roads as a separate case, it is most appropriate to identify them as a chargeable road but levy zero charge per kilometer. An example of this is the UK M6 Toll Road; as users are already paying for use of the road to a private operator, no additional charge for its use should be levied as part of a national charging scheme and it could be classed as an exempt road.

In addition, the charging models for the above may be enhanced through consideration of other relevant parameters particular to the scheme in question:
Timeslot (single and multiple) - The charging parameter per kilometer of driven distance may be varied depending upon when the driving occurred. For example, higher charges might be levied for the same road if it is driven during peak periods. Timeslots are usually incorporated into charging schemes to influence road use, and thereby reduce peak hours congestion.
Regional Area - Usage of roads in areas of high economic activity (and usually congestion) may be charged at higher rates than those in other areas. For example, usage of roads in the South East region of the UK might be charged at higher rates than those in Scotland.
Vehicle Specific - The road user charge may be varied depending upon the type of vehicle. Existing schemes exhibit differential charging based upon the weight of the vehicle, emissions class, number of axles, presence of a trailer and other parameters.

### GPS Specific Considerations

A GPS based OBE is able to leverage its on-board GPS sub-system to provide accurate determination as to the position of the vehicle. GPS can also provide for accurate calibration of the real-time clock within the OBE to ensure timing accuracy in respect of the road user charging scheme implementation.

However, in respect of this determination of "position", the GPS sub-system provides only position coordinates termed waypoints (plus other parameters such as velocity and heading which are derived by the GPS from the immediate history of previous waypoints).

Recognizing this, an on-board GPS may be insufficient to provide a comprehensive road user charging system, and that it can be augmented with software systems and data sets to provide for the following core functionality which is discussed later:
Heading Determination
Charging Distance Measurement
Charge Area Identification
Road Identification

### Heading Determination

Position coordinates are usually output by the GPS sub-system at 1 Hz (i.e. once per second). These position coordinates are not exact, as each is subject to an error depending upon the type of GPS chipset/antennae used, and the quality of the signal from the satellites being received by it). Therefore, the repeated fixes will "wander" randomly around an error circle centered upon the vehicle's true position.

Using GPS position coordinates alone, the heading of the vehicle is determined by computing the vector between successive fixes, to derive speed and heading. At appreciable speeds this provides accurate results, but for low speeds, the positional error exhibited by the GPS subsystem can become significant. When the vehicle is stationary, the wandering fixes can give the vehicle a "phantom" speed, and continually changing heading.

Therefore the system may incorporate a gyro into the OBE to supplement the positional data derived from the GPS sub-system, and provide for sufficiently accurate heading determination across the entire speed range.

### Charge Area

An OBE according to preferred embodiments must be able to determine from its GPS derived position whether it is in a charge area (the territory of the scheme in question), and if so, which charge area such that it may apply charging parameters appropriate to the specific road user charging scheme in operation.

Charge areas may be identified by a polygon "ring fence", the points of the multi-sided polygon being described by position coordinates. A preferred OBE may be aware of any number of such charge areas belonging to the same or different road user charging schemes, and comparison of its current position against them will determine the presence of the vehicle within one (or more) charge areas (as charge areas may be overlaid).

Charge areas represent the simplest form of "map", in that they describe the boundary geography of a road user charging scheme, but as such do not make any reference to the road network therein.

### Road Identification

Without a calibrated map against which to plot its position coordinates, the OBE does not know which road the vehicle is on, and hence cannot determine the classification and charge liability under a given road user charging scheme.

Cross referencing the position coordinates of the vehicle with a map of some sort in order to determine the road on which the vehicle is (and potentially also its charging classification) is termed "map matching".

Specific map matching methods and their implementation comes within the competence of the skilled person and are therefore not discussed further here for brevity.

There are five generic "map matching" methods which are known to persons skilled in the art and, listed below in increasing order of complexity:
Road Segment Identification (RSI)
Point to Point Matching
Point to Curve Matching
Curve to Curve Matching
Statistical (fuzzy logic) Matching

RSI and simple map matching are usually sufficient for road user charging applications, whereas the more complex map matching is more applicable to real-time vehicle navigation systems.

The data set against which the vehicle position is compared is usually referred to as a "map", although it is not necessarily a complex vector map but may be any form of information relating to the route which can be compared with the position of the vehicle. For example, RSI "maps" are usually simple flat file tables describing the proximity waypoints necessary to unambiguously determine the presence of the vehicle on one of a number of road segments (usually motorways).

### Road User Charging Technology Elements

In a GPS based system, the OBE installed in each vehicle is able to determine its position and heading by virtue of its integrated GPS subsystem, possibly supplemented by additional sensors (such as a gyroscope, magnetometer and in some instances a connection to the vehicle tachograph). The additional sensors enhance the raw GPS data in order to provide for increased spatial and temporal certainty than would otherwise be achievable with a simple GPS positioning system alone.

This enhanced positional data stream may be processed by one or more of the algorithms described below in order to provide for a comprehensive system capable of fulfilling all of the anticipated road user charging scenarios identified above.

Route Summarization & Reconstruction ("Off-Board Map Matching"). The positional data stream is processed on-board the OBE to provide data that is suitable to show road usage and for transmission to the back-end system. This data can be stored in internal memory such that the exact route of the vehicle might be later determined by matching this data against a detailed off-board map of the road system. The route may be summarized by a data reduction algorithm into just the key data elements required to reliably reconstruct it at some time in the future so as to reduce the on-board memory (storage) requirements.

On-Board Road Segment Identification (RSI). This is a map matching function. The positional data stream is processed on-board the OBE and compared against a map, for example, in the form of a digital representation of the road system (also stored on-board the OBE). The RSI algorithm may be used to unambiguously determine the presence of the vehicle on a specific segment of road of known identity, length and charging parameter.

Charge Area Identification (CAI). The positional data stream is processed on-board the OBE and compared against a given territory or charge area (or areas in the case of multiple charge areas each with different geographies or charging parameters) described by a polygon "ring fence". The CAI algorithm determines whether the vehicle has entered the charge area (recording where and when it has crossed the "ring fence") and potentially, its continued status within the charge area (such that distance driven within the charge area might be specifically identified). The definitions of the charge area polygons may be stored on-board the OBE.

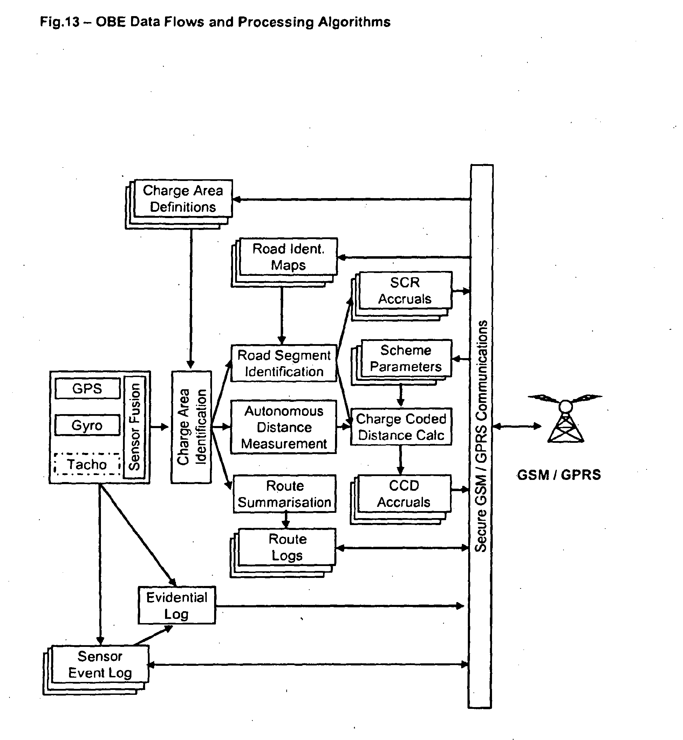

Figure 13 shows the data flows and processing algorithms of a preferred OBE.

Given that potentially all of the above algorithms can be implemented in a comprehensive and flexible road user charging system, consideration must be given to where each of these algorithms are implemented, in respect of on-board the OBE, or within the back-end systems (off-board the OBE).

Clearly some algorithms are obviously best placed on-board the OBE, whereas others might be implemented either on-board or off-board the OBE. A system which exhibits a greater degree of processing on-board the OBE would be described as a Distributed System, whereas one which exhibits more processing within the back-end systems would be described as a Centralized System. The placement of the different processing tasks (i.e. the implementation of the algorithms) is a primary architectural design feature.

### Distributed vs. Centralized Processing Architecture

Given the capability of a basic OBE to derive the raw positional data stream from its GPS and supplemental sensors, it is important to consider the optimum placement of the above algorithms in respect of residing on-board the OBE, or off-board within the back-end systems.

All embodiments of the invention employ both on-board and off-board map matching in order to provide for a comprehensive and flexible system with respect to road user charging, in addition to providing for a detailed level of evidential charge validation. Such embodiments may include both RSR and RSI functionality, whereas an off-board only system would not require RSI functionality or detailed maps.

The primary road user charging operation of an OBE using on-board map matching may comprise the following:

Processing of the sensor fusion output to determine the relevant charge area (CAI), followed by processing of the supplemented positional data by map-matching means, embodied as the Road Segment Identification (RSI) and Autonomous Distance Measurement (ADM) algorithms using input parameters appropriate to the particular scheme as identified by the CAI algorithm; accrual of Charge Coded Distance (CCD) and Statement Credibility Records (SCRs as explained later) on-board the OBE and batch sending via GSM/GPRS on a regular basis (typically once per day on average).

The processing of the supplemented positional data is recognized to be a one-way (or "lossy") mathematical transform in that the original data cannot be re-created in reverse from the CCD and SCR results.

OBEs according to embodiments of the present invention incorporate both on-board and off-board map matching in an advantageous manner so that road user charging scheme of either type may be implemented using the same OBE. On-board Road Segment Identification (RSI) and ADM algorithms for on-board map matching are supplemented with on-board Route Summarisation (RS) for off-board map matching, and off-board Route Reconstruction (RR) in the back-end. This single system that provides for high efficiency whilst enabling comprehensive evidential retrieval and bill validation.

### Billing Credibility

For a road user charging scheme to be effective, it is essential that users have absolute confidence in the accuracy of the scheme, otherwise it will be inoperable from both a political and operational perspective.

In order to provide assurance to users that the bills generated by the scheme accurately reflect their usage of the roads infrastructure, some detail can be provided as to the routes traveled. In many cases, this statement may simply serve as a "reminder" as to actual usage thereby reducing the number of unnecessary challenges as to the charge.

This enhanced level of detail may be termed a Statement Credibility Record (SCR), and analogous to the call record of a cellular telephone bill. It must be easily readable by the user and concisely summarise the usage of the road network at an appropriate level of detail. As to what comprises "appropriate detail" will be determined by the specifics of each (local) road user charging scheme, but it is clear that the charging scenario employed will determine the type of data that must be shown.

For example, the following information may be provided:

### Fixed Fee Charge Area

The time of (each) entry into the charge area and the location of the entry point should be identified, particularly if there is a charge differential based upon time zones (such as in the current London Congestion Charging scheme). This time of entry can be that at which the OBE determines that it has crossed into the charge area as defined by the on-board "ring fence" definition.

The location of the entry point requires additional processing in order to make the position coordinates (at the point of crossing of the "ring fence within the readiness zone") more meaningful and recognizable to the user. In preferred embodiments, each valid entry point into the charge area is described by a road or street name for inclusion in the SCR. These entry point definitions (derived from route vector descriptors in preferred embodiments) may either be assigned on-board the OBE, or off-board by the back-end system, but it seems most appropriate to use off-board assignation (as part of the billing function). This eliminates the requirement to propagate the entry point definitions to the population of OBE likely to enter the charge area.

### Distance Based Charge Area

In addition to the above scenario, a distance based charge area scheme adds increased complexity as driven distance inside the charge area must be provided. This can be calculated on-board the OBE using a distance algorithm (distance algorithms for calculating distances from GPS and potentially additional sources are known in the art). Further, the SCR must account for vehicles that leave and then re-enter the charge area, perhaps many times, recording the distance driven within the charge area for each visit.

### Total Distance Based Charge

A total distance based charge is the simplest scheme to implement (even considering different time windows) but provides for the least definition as to the composition of the SCR. Driven distance can be summarised on a daily basis, and appropriate account made of different time windows.

With respect to the identification of the routes or roads driven, this will only be possible if at least on-board RSI is implemented, whereupon the SCR may take the form as for the following charging scenarios:

### Motorway Only

An on-board RSI algorithm may be utilized which uniquely identifies each motorway segment driven. The segment identifiers tagged with the time of entry can be uploaded to the back-end systems for expansion into meaningful data (such as "19-Jul-2005 14:12 M1-J12N"). This will provide for identification of motorway driving but not of other roads where only a daily driven distance figure can be reported.

### Motorway and Other Roads

Given that the RSI data set can be expanded to include other roads (such as All-Purpose Trunk Roads, bypasses etc) in addition to motorways, these can also be included in the SCR. There is a considerable increase in complexity given that there are usually a much larger number of possible entry and exit points for such a road in comparison with a motorway segment, and it is likely that the reporting detail in the SCR may need to be reduced.

### All Roads

It is likely that an "all roads" charging scenario is a hybrid of a number of the above scenarios. For instance, one proposed scheme could be a hybrid comprising the Motorway Only and Total Distance based scenarios (the latter being the total driven distance of non-motorway roads). Consequently, an "all roads" SCR is likely to be a hybrid of the different SCRs presented above.

### Charge Validation

The "one-way" or "lossy" processing of the original positional data means that in the event of a challenge by a user as to the accuracy or correctness of a bill, the base evidential data used to create the bill has been lost in the charge calculation process. The ability to retrospectively validate a user's bill in the event of a challenge is paramount.

A key feature of some preferred embodiments is the use of an evidential log. Potentially in parallel with the CCD/SCR processing, positional data is processed, and the much reduced (summarized and/or selected data) route written to on-board memory. Depending upon the particular requirements of the scheme under which this data has been recorded, it may be retained for a reasonable period of time sufficient for a user to have received his bill and raised a challenge as to its validity via the scheme operator's CRM system.

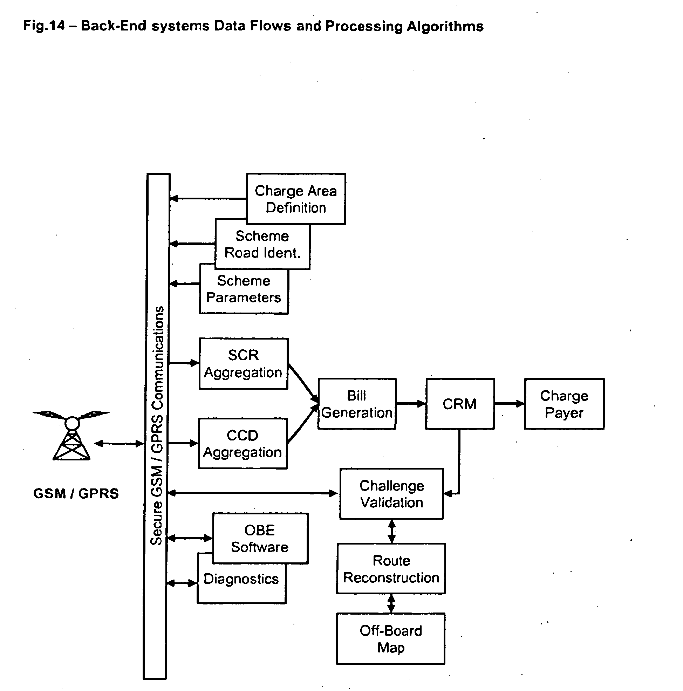

The back-end system (for example as shown in figure 14), in the event of a user challenge, can issue a request to the appropriate OBE for the retrieval of the Evidential Log. Given that a challenge is likely to relate to a specific day, or portion thereof, better efficiency of communication can be achieved by providing the retrieval of only a specified portion of the Evidential Log by time/date range.

Note that in an operational environment where the GSM/GPRS sub-system of the OBE is powered-off for the majority of the day, direct communication at will is not possible with the OBE. Instead, the request for Evidential Log information must be flagged to the OBE next time it is in communication with the back-end system by virtue of communications for example for the purpose of CCD and SCR upload.

Once retrieved, the summarised Evidential Log may be studied manually or automatically for reconstruction by the off-board map matching system to determine more precisely the route driven by the vehicle against a detailed map of the road system. The output of this off-board map matching can then be compared with the CCD and SCR of the bill to determine the validity of the user's challenge. If the user's challenge is not upheld, the reconstructed route can serve as evidence as to the movements of the vehicle at the time in question.

The on-board RSR algorithm can provide for extremely high efficiencies of compression of the Charge Validation data, permitting many days worth of detailed routes to be stored on-board the OBE to provide for subsequent evidential use.

The on-board RSR algorithm can be very simple, comprising approximately only 2000 lines of code, thereby being robust and requiring minimal processing power.

Charge Validation data is sent only in the small percentage of cases it is required (i.e. as an exception) and not as a matter of course. The incremental GSM/GPRS data traffic and the costs associated with it are therefore minimised.

Given that dispute settlement is a somewhat exceptional process, and does not occur in real time, the off-board map matching system within the back-end system need not be provisioned to the same degree of run-time resilience as the primary road user charging systems. The off-board map matching system is a comparatively small and inexpensive satellite system for the processing of exceptions.

The Charge Validation data is a summarisation of the route driven by the vehicle described by waypoints, it is not pre-processed by the RSI (road segment identification) algorithm. This means that the evidential data is provided at the same high resolution irrespective of the class of road traversed. For example, as much evidential detail would be provided on a small country D-road as would be provided for a motorway segment. This differs from the SCR wherein the road detail is lost for all but major roads.

### OBE Configuration Maintenance

The communication between the OBE and the back-end systems is obviously bi-directional given the system design description in the preceding sections. Taking account of the fact that the communications with the OBE might not be available at all times, as the GSM/GPRS sub-system be powered-off for a considerable proportion of the day, and the primary functionality ideally available between the OBE and back-end systems in preferred embodiments may be summarised as follows:
Charge Area Definition update - all known charge areas are loaded into the OBE at time of manufacture, but over time new charge schemes will emerge, and their associated charge area definitions must be retrospectively propagated to existing OBE. To eliminate any requirement for manual intervention, update of the charge area definitions can be provided for over-the-air using the GSM/GPRS sub-system.
RSI data set update - Not all charging schemes will require a map (an RSI data set), so new RSI data sets (for new charging schemes) and updates to existing RSI data sets (to take account of road changes and additions) can again be provided for over-the-air using the GSM/GPRS sub-system. A data (and hence cost) efficient model for the propagation of new RSI data sets is presented in the following section entitled "Multi Country Operation". Additionally, recognizing that an RSI data set is a record based file, updates to existing data sets may be provided on a per record basis with only changes being downloaded, thereby eliminating the requirement to resend the complete file. This is important as RSI data sets will typically be of the order of a few hundred kilobytes, and potentially more if the scheme includes other distinct road classes in addition to motorways.
Charging parameter update - The charging parameters determine the charge per kilometre for the different classes of road, the time periods during which charges are varied and scaling factors for vehicle classes, regions etc. Changes to these charging parameters must again be propagated over-the-air, but in advance of them being activated to ensure that all OBE have the correct data prior to the effective date of the change the scheme. All such propagated scheme data must therefore be tagged with a "go live" date, and a confirmation mechanism implemented such that the back-end systems can confirm that the CCD received from an OBE has indeed been processed using the correct charging parameters. It is notable in the event of a failure of an OBE to update its parameters, the Evidential or Route Log could be retrieved as an exception and RSR used to reconstruct the charge correctly.
OBE software update - The OBE software must be maintained to allow for fixes and revisions to the operating software and ETC application, and there must exist the capability to load new ETC applications (specific to a new scheme) over-the-air. A dual-image approach shall be employed such that in the event of a problem with an image (especially the operating software), the OBE can revert to the previous (working) image. This is essential is continued communication with the OBE is to be assured.
OBE diagnostics - The OBE will log event data to memory indicating important aspects of its operation, such as loss of GPS or GSM/GPRS service, faults and events. The back-end system will have the capability to access this data from each OBE, using both "push" and "pull" mechanisms as appropriate. Aggregation of this data by the back-end system for the community of OBE will provide for an enhanced level of systems diagnostics.

These diagnostics will provide for:
Detailed understanding as to the operation of the system as a whole
Flaws in the configuration (i.e. ambiguous road segment identification)
Substantiation of performance levels (i.e. under a Service Credit Regime)
Identification of localised service loss (especially GPS, due to jamming)

### Multi-Country Operation

It is anticipated that more road user charging schemes will be implemented in other countries over the next decade, and the inventors have designed a single OBE platform which can reliably operate under different charging schemes, each with its own specific requirements. European Electronic Toll Service (EETS) work aims to provide a general specification for search on OBE.

### Software Architecture

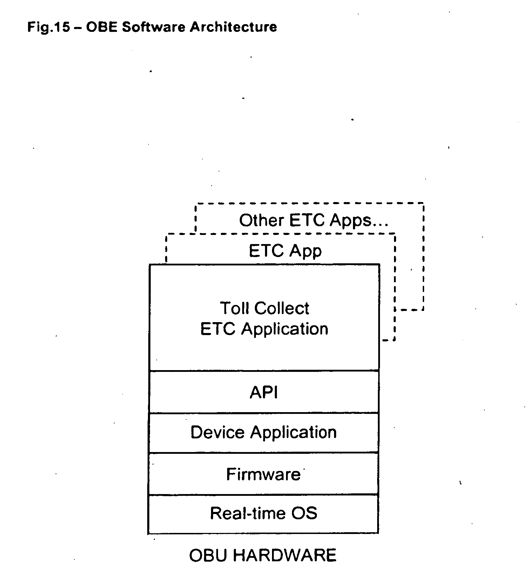

A software architecture according to preferred embodiments is shown in figure 15.

The Application Programming Interface (API) provides for simple access to the wide range of functions (provided by the OBE hardware and firmware) required for the implementation of a specific road user charging (ETC) application.

Definition of the API permits work by one or more embedded software development groups in the provision of a suite of ETC (electronic toll collection) applications such that several active national road user charging systems be supported. Development can occur independent of and largely without the requirement for detailed knowledge about the operation of the underlying hardware.

Further, new OBE hardware can be developed in the future (i.e. as part of a technology refresh program) to offer the same API such that the suite of national ETC software applications is portable between OBE hardware platforms.

The preferred OBE will enable support for multiple ETC applications to be held in memory simultaneously, although only one will be active at any one time determined by the position of the vehicle with respect to a set of "ring fence" charge area boundaries, each demarcating an individual scheme. It is likely that the scheme boundaries and the country/state boundaries will be the same in the majority of cases.

### Multiple Charge Area Definitions

A charging scheme may be described by a "ring fence" of waypoints (positions on routes) which indicate the boundary of its charge area. This charge area definition enables the OBE to identify which ETC scheme is applicable at any instant, and hence which specific ETC application should be used to:
process GPS sub-system and supplemental data
communicate with the appropriate national back-end system
maintain evidential data despite exiting a given charge area

Consider an environment in which there is an existing population of EETS capable OBE according to preferred embodiments serving a number of national road user charging systems. In order to add an additional national road user charging system, at least the new charge area definition and possibly also the network address of the new charging scheme back-end system (as an IP address) must be populated to all OBE. This will enable the OBE to determine that it has entered the new charge area, and indicate this to the scheme operator using GPRS (roaming onto the local national network as appropriate). The charge area definition should also be tagged with a "go live" date such that it might be populated to the community of OBE in advance of its required operation.

This "ring fence" charge area definition is considerably smaller than the likely RSI data set required to describe the chargeable road network and the ETC application required to effect the charging scheme.

This approach ensures that all OBE are aware of the new charge area with the minimum volume of GPRS traffic (and associated cost). Further, it minimises total operational cost of an EETS system by eliminating large downloads to OBE that might never enter the new charge area.

### Entry into the new charge area

Given recognition by the OBE that it has entered the new charge area, and that the charging scheme has already gone live, the preferred OBE must load the new ETC application and (optional) RSI data set associated with the scheme. However, the design of preferred embodiments does not require that this happen immediately or with any great urgency.

A central feature of the preferred embodiment is the OBEs capability to utilise its route summarisation and reconstruction algorithm (RSR) in the period before the application and RSI data set are made available to it, ensuring compliance with the new charging scheme with only the charge area definition being present on-board the OBE.

Until the ETC application and RSI data set is loaded, the RSR algorithm simply writes the summarised route to on-board memory. This summarised route log may then simply by uploaded to the back-end system at regular intervals (such as once per day) such that the value of outstanding charging data held on the OBE does not reach levels so as to incite fraudulent activity in the avoidance of the charge. These RSR logs can then be processed by the off-board map matching systems.

### Charge Scheme Application and RSI Data Set Upload

Given upload of RSR logs to the new back-end system initiated by the OBE whilst in the charge area, the back-end system may make an intelligent decision as to whether and when to upload the new ETC application data and associated RSI data set.

Use of RSR enables the OBE to operate in compliance with the scheme without such a download, and in certain cases it may be more economical to process the RSR logs as an exception until over a period of time the vehicle demonstrates a propensity to enter the new charge area.

At this time, the value of charge collected should justify the network costs of downloading the new ETC application and RSI data set (which may be hundreds of Kilobytes and transferred whilst the OBE GSM SIM is roaming on a foreign network, thereby incurring substantially higher network transmission costs). This makes for both a technically and commercially viable EETS system.

The transfer of the application and data set can be optimised for the comparatively slow transmission speeds encountered with GPRS, and structured such that in the event of communications problems (momentary loss of service etc), the file transfer will resume without loss of integrity nor restart (to avoid high cost of retry attempts).

A number of additional features can by implemented in preferred embodiments in an EETS environment, summarised as follows:

### Minimisation of Roaming Costs

Prior to leaving a charge area, the local GSM network service might be dropped (i.e. in the event of loss of service), the GSM sub-system then roaming onto a GSM network of the adjacent nation. Consideration in the construction of the road user charging scheme is given to the minimisation of roaming costs and increased data transmission cost as a result.

### Assignment of Preferred GSM networks

All GSM SIM cards have the capability to select a "preferred" GSM network should multiple networks be available. As the SIM card in each OBE will have a "home" network, and the home mobile network operator will likely have preferential (reduced cost) roaming agreements for different countries, the home mobile operator should be responsible (and indeed is incentivised to) ensure that the SIM is updated with the most economic preferred networks list on an ongoing basis.

### Beacon based systems support

There are a number of beacon based tolling schemes already in existence in Europe, comprising both toll plaza based such as exhibited in France, Italy and Spain, together with gantry based systems such as exhibited by Austria.

One preferred design provides for ETC applications that enable the OBE to mimic the operation of simple DSRC OBE (such as the Kapsh OBE), passing the onus of charge calculation to the beacon system operator (not the OBE itself). Such a design includes off-board map-matching.

### DSRC interoperability problems

Despite general consensus of agreement in Europe around CEN 278 5.8Ghz Microwave DSRC, Italy and Germany operate incompatible schemes which will require additional (externally connected) DSRC hardware. Preferred OBEs can be with a CAN-bus connector specifically to support this purpose and provide for the possibility to true pan-European EETS operation.

Note that 5.9GHz Microwave is used in the USA, and this will require a differently characterised OBE (as the chipsets used for the DSRC sub-system are necessarily different). This should not present a problem however as there is almost no transfer of vehicles between the USA and Europe.

### Alternative uses of the OBE

Whilst the preceding detailed description relates to an OBE for road user charging, the likely presence of an OBE in a vehicle gives rise to additional or alternative services which might be deployed more cost effectively as a result. This sharing of the OBE across multiple services is especially attractive in a future EETS environment where a harmonised OBE platform is utilised by a majority of national toll operators.

Thus the OBE can also be used in the following route usage evaluation and other schemes. The skilled person will appreciate the minor adaptation necessary to the functionality that is already present.

Digital Tachograph Replacement - a GPS based OBE can provide a future placement for the current mechanical and digital tachographs.

Vehicle Telematics Platform and Services - an OBE equipped with a GSM capability can provide a gateway service for the transmission of wider vehicle telematics data (the CDS ISS acting as a Value Added Service Provider).

Emergency Telephone Service for Europe - called "E-Call", and is likely to be a future European requirement. A GSM equipped OBU can provide an integrated E-Call function such that the overall cost of the E-Call program is reduced.

Pay-as-you-drive Insurance - there are currently pilot schemes investigating the potential for more usage based insurance charges. The track data from the OBE can be used to provide for such a risk assessment to insurers.

Tachometer Fraud Investigation (by VOSA) - a GPS OBE can provide an accurate measure of the distance driven by a vehicle, such that it might be compared with Tachograph reading (for example taken at bi-annual VOSA inspections) to identify and deter tachograph fraud.

Automated Tachometer Data Collection - at present, data is collect from tachographs by the haulier and required to be maintained for a period of two years. This data typically takes the form of paper charts, which are time consuming to audit. Analysis of track data by the CDS ISS might be used to alert authorities to likely abusers of the driving laws such that such tachometer audits might be more effectively focused on likely offenders.

Accident Investigation (by the Police following accidents) - in the event of an accident, Police take into account data provided by the Tachograph. Given the high incidence of Tachograph fraud observed, data from the OBE might provide Police with more expeditious and reliable access to such data. This might be enhanced if additional telematics information is also being monitored (i.e. via the CAN bus).

Lorry Tracking (performance metrics by hauliers) - current lorry tracking telematics services by fleet hauliers require investment in dedicated systems from a wide variety of minority vendors (whose systems are largely incompatible). The CDS ISS could offer the same data as a Value Added Service Provider, eliminating the need for hauliers to invest and deploy technology themselves.

Vehicle Route Analysis (by Highways Agency etc) - data mining of the CDS ISS database of all routes driven (by different vehicle categories) would provide information of value to the Highway Agency, Environment Agency, Department for Transport etc.

Customs Enforcement (of fuel, contraband, people) - analysis of routes driven by lorries might yield the location of illicit red diesel suppliers in addition to the location illegal people/contraband smuggling operations.

### OBE Design

To ensure that the OBE is cost competitive it may be characterized at time of manufacture such that some of the capabilities provided in the full design given below but not required for a specific deployment may be deleted without impact to its proper operation. Thus the following description includes features which may not be implemented in some preferred embodiments, but all the features described can be combined as appropriate.

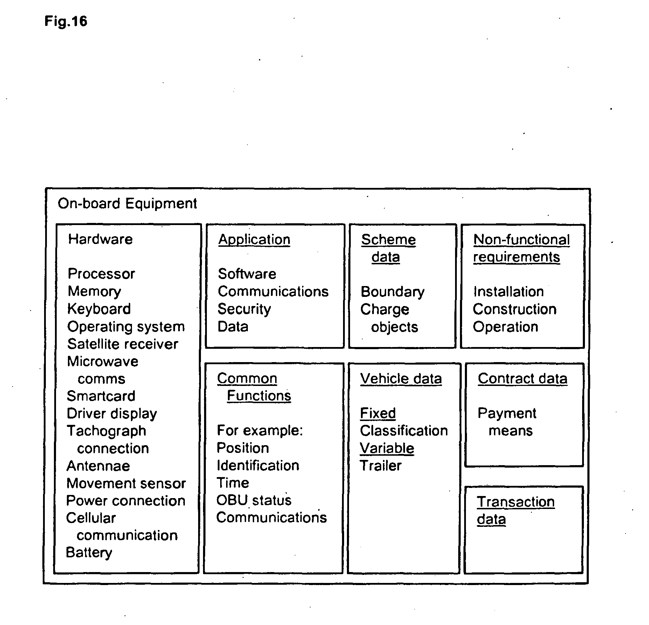

Figure 16 shows a super-set of facilities that can be provided in a preferred embodiment. Now we describe these different physical components, their operation and how their design has been optimized.

### Design Overview

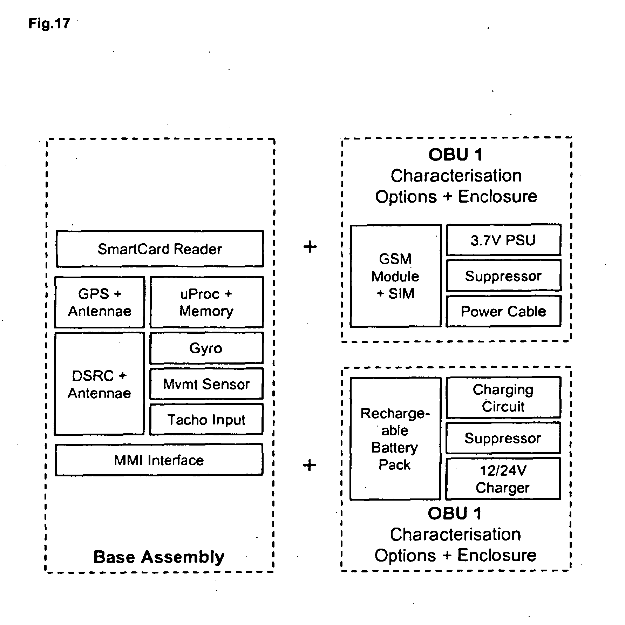

Figure 17 gives a summary as to physical OBE design, and how it might be characterised for two specific national variant (OBU 1 and OBU 2).

Pertinent elements of the design are described below.

### GPS Subsystem

The GPS sub-system comprises a GPS receiver, integrated GPS antennae, and connector for an (optional) external GPS antenna. The GPS sub-system is the core technology that provides for road user charging by virtue of its capability to accurately determine the position of vehicle, represented as a set of coordinates.

The raw data stream of coordinates is used to determine the total distance driven by the vehicle in addition to its position with respect to the road system. Algorithms for such position determination are known in the art. Any determination of position with respect to the road system requires cross-reference to a map of some sort; the map-matching architecture embodied within some preferred OBE designs is described hereinbefore.

All GPS systems require an effective antenna for maximum satellite visibility and received signal quality. Current road charging OBE typically employ external antennae in order to achieve this. However, the installation of external antennae adds significant time and cost in respect of the installation of the OBE.

One preferred design utilises an integrated antenna which is internal to the OBE enclosure, thereby significantly reducing installation time and potentially providing for the option of user self-install.

The use of integrated antennae gives rise to concerns about the reliability (in respect of continuity and quality) of the received GPS signal. These concerns arise from the observation that the vehicle body-shell is predominantly constructed of metal and operates to a greater or lesser degree as a Faraday cage. The fitment of heat reflective metalised windscreens and fine filament heated windscreens further give rise to concerns.

However, GPS chipset technology (and to a lesser degree antennae technology) has advanced rapidly over the last few years and is expected to continue to do so. Investigations indicate that one of the new generation of high sensitivity (HS) GPS receivers that offer a sensitivity of up to -159dBm would prove entirely satisfactory in such an in-vehicle environment. For example, results from the SiRF StarIII high sensitivity receiver have proved very encouraging. More sensitive GPS receivers are also available which are predominantly targeted at military applications.

### Supplemental Sensors

Any combination of supplemental sensors may be provided in the designs; a tachometer/tachograph input, a magnetometer, gyro, CAN-bus interface, accelerometer and/or movement sensor. These are described below:

### Tachometer Input

Taking the UK as an example, tachometers (both "senders" and tachograph head units) are inaccurate measures of speed and distance due to the allowed calibration error tolerance of 5% and environmental variations (road surface, temperature, tyre wear etc).

Further, the tachometer is subject to widespread fraud of varying degrees of complexity, and basing a critical road user charge parameter (driven distance) upon the tachometer input without validation would likely be unacceptable for the purpose of a road user charging scheme.

The preferred OBE design therefore can incorporate a tachometer input such that it would be compliant in countries such as Switzerland where distance measurement derived primarily from the tachometer is a mandatory requirement, but the system may be designed to operate without it. The driven distance can instead be derived from the GPS subsystem using a distance measurement algorithm. Unless specifically mandated by a given national road user charging scheme, the tachometer input would not be used.

Elimination of any operational dependence upon connection to the tachometer of the vehicle provides for a much reduced installation time. It also relieves the operator of the requirement to involve only the regulatory approved bodies in the installation process, or train and certify new installation agents to the standards of such bodies.

It is notable however that the equivalent of a tachometer input is frequently available in modern passenger cars of high specification, as an equivalent signal is usually available on the vehicle's CAN-bus (along with a plethora of other potentially useful data).

However, a considerable number of older vehicles without CAN-bus will remain in circulation for some time, and this limits the usefulness of this observation for any mandatory application such as road user charging.

There does exist the possibility that the connection to the CAN-bus (where available) might lead to the deployment of (optional) telematics services which might utilise the OBE as a "telematics gateway".

One preferred OBE is equipped with a CAN-bus interface for precisely this purpose.

### Magnetometer

Knowledge of the vehicle's heading and changes to its heading is an extremely useful enhancement to raw GPS positional data. For example, it can be used in an on-board Road Segment Identification (RSI) algorithm to increase the confidence that the vehicle is on a given segment with respect to the road network.

A magnetometer measure heading and is time independent. Some correction must be made before data from the magnetometer is used, to allow for the effect of the vehicle on the readings.

### Gyro

The gyro measure angular acceleration, but is also essential, for example, in the German Toll Collect project as the requirement to identify presence on a road segment within the first third of its driven distance mandates more precise determination of position and direction, which is especially important for short road segments. Given the assumption that the requirements (as above) of the German authorities will remain constant, any OBE design applicable to the Toll Collect project must therefore incorporate a gyro.

Whilst moving at medium and high speeds, the GPS sub-system can accurately determine the heading of the vehicle mathematically from the previous waypoint(s), as the positional error has a negligible effect. However, at low speeds and especially whilst stationary, the GPS positional error can make accurate heading determination difficult or impossible. The purpose of the gyro and/or magnetometer is to supplement the GPS positional data with heading data when required at low speeds.

### Movement Sensor

The presence of a movement sensor in the OBE can be useful in the following instances:
To bring a battery operated OBE out of a power-save "sleep state" once movement is sensed. This eliminates the requirement to unnecessarily power the GPS sub-system when the vehicle is stationary for long periods.

To serve as a validation that when the vehicle is moving, appropriate sensor input is being received from the primary sub-systems to reflect this. For example, consider an OBE with an external GPS antenna but no connection to the tachometer. The system could be defrauded by disabling the antenna, using the vehicle, then returning it to its original position before reconnecting the antenna. A movement sensor precludes such fraud.

However, the movement sensor is an optional component, its function could be performed by the gyro (given appropriate power and interrupt circuitry).

One (or more likely two) CAN bus connectors on a preferred OBE will provide flexibility for the connection of additional (non-standard) sensors as required. For example, this would support an existing national road user charging scheme with non-standard roadside to vehicle communications.

Indeed, a number of examples may be identified at this time:
connection of an (external) Infra-red DSRC sub-system to support the German Toll Collect scheme, which uses Infra-red DSRC rather than the more standard 5.8Ghz microwave.
connection of an (external) microwave DSRC sub-system to support the proprietary Italian Telepass system.
connection of an (external) 5.8Ghz DSRC sub-system to overcome situations where heat reflective or metalised windscreen glass precludes the use of the DSRC sub-system within the OBE due to excessive attenuation of the microwave signal.
connection of an (external) 5.9GHz microwave sub-system to support the DSRC standard used in the United States. In the early market entry phase for T-Systems, this would be quicker and more cost effective for the purpose of initial trials than direct integration of the 5.9GHz assembly into the OBE.

In addition, the CAN bus is essential to provide for the increased connectivity required such that the OBE can perform the function of a "telematics gateway", and hence platform for value added services.

### DSRC Subsystem

In the preferred designs, the combination of an advanced GPS sub-system and the gyro supplemental sensor serve to eliminate any requirement for assistive position beacons, thereby minimising the total cost of the system by eliminating the requirement for costly roadside infrastructure. However, a DSRC subsystem can be provided for other purposes.

The DSRC sub-system itself comprises an antenna, an RF (radio frequency) element and a Baseband element. A typical DSRC antenna is approximately 3-4cm square area. The carrier frequency emitted by the roadside gantry is typically used to (remotely) power the DSRC system in beacon based systems such that they can operate for extremely long periods on small batteries, but is used simply and to provide an "early wake-up" of the DSRC sub-system for a GPS OBE.
Speed of DSRC wake-up is critical as the "footprint" of the microwave beam emitted by the roadside gantry is of the order of tens of metres, and as such is traversed by the vehicle in a comparatively short time window.

The table below shows the number of seconds for which a vehicle is in two representative microwave footprints of 10m and 20m at different speeds:

| **Km/H** | **10m** | **20m** |
|---|---|---|
| 10 | 3.6 | 7.2 |
| 20 | 1.8 | 3.6 |
| 30 | 1.2 | 2.4 |
| 40 | 0.9 | 1.8 |
| 50 | 0.7 | 1.4 |
| 60 | 0.6 | 1.2 |
| 70 | 0.5 | 1.0 |
| 80 | 0.5 | 0.9 |
| 90 | 0.4 | 0.8 |

In summary, data volumes of approximately 1KB may be exchanged under expected conditions, and this is ample for the exchange of OBE unique identifier and status information. It should also be noted that DSRC might provide for the transmission of charging data provided that sufficient security is overlaid upon the transmission (to prevent "spoofing"), but in the T-Systems next generation design, GSM/GPRS transmission is in any case preferred for this purpose.

Microwave DSRC suffers from significant attenuation by heat reflective, metalised or filament heated windscreens. In such instances, the use of an integrated DSRC antennae might not be effective, and so the option of an external DSRC antennae is provided. One preferred design employs the CAN-bus of the OBE and an external DSRC antennae mounted outside the vehicle and connected via a cable in such circumstances.

### GSM/GPRS Subsystem

The OBE requires effective mobile communications with the data centres (back-end systems) in order to transfer charging data for aggregation and billing. Preferred embodiments utilise GSM/GPRS for this purpose given its pan-European service availability and comparatively low cost.

The preferred GSM/GPRS sub-system comprises a commercially available "off-the-shelf" module added to the OBE at time of manufacture. Use of an "off-the-shelf" module provides for the following advantages. Firstly, modules are GSM pre-certified for use with the GSM network. Secondly, "Off-the-shelf" modules are produced in volume by a number of manufacturers for a wide range of applications. Thirdly, some alternative embodiments provide for non-GSM equipped variants in which the use of a module enables a common base circuit board to be utilised for all variants, thereby improving the fundamental economics of the design, manufacture and maintenance of the common OBE platform (or Base PCB).

The GSM network provides for a multitude of means of communication (comprising GPRS, SMS, BS26 circuit switched data, cell broadcast etc). Of these, GPRS will be used as the primary means of communication for both upstream and downstream applications. As mentioned previously, some preferred embodiments employ both on-board RSI and RSR/off-board map-matching. This makes them highly resilient to GPRS non-availability (either through no GSM service or congestion of shared GPRS bandwidth).

### Integrated Smartcard

The opportunities for use of Smart Cards in the OBE are as follows:
Activation - Insertion by the Approved Installer of an Activation Master smartcard initialises a new OBU, and encodes the installer data into the device for the purpose of supply chain tracking.
Personalisation - Insertion of a valid user Smart Card into a new OBE causes automatic personalisation of the OBE, permanently allocating it to that user. This eliminates any requirement for complex and costly OBE programming systems (such as "Service PCs") within the approved installer network.
Deactivation - Insertion by the Approved Installer of a Deactivation Master smartcard permanently renders a work OBU inoperable (once all charging data has been uploaded as part of the Deactivation process).

In addition, the Smart Card concept also provides for:
Charging Data Transfer - Charging data might be stored both on the OBE and the Smart Card, such that at convenient times (e.g. when refuelling as suggested) the Smart Card is removed and inserted into a reader whereupon the charging data is extracted and transmitted back to the Operator's back-end systems. The Smart Card becomes the (out of real-time) data transfer medium for charging data, statement credibility records, enforcement data, evidential data and diagnostics data between the OBE and the back-end systems. Also, the Smart Card provides for retrieval of charging and other data by post.
Usage Data Transfer - Distinct from road user charging data, usage data pertains to the vehicle and driver as for a digital tachograph. For the OBE to provide the combined function of a road user charging device and a digital tachograph (a possible future scenario), the user Smart Card must provide for operation as per the current Digital Tachograph Type Approval standards.
Charging and Funds Transfer - The Smart Card provides for the opportunity for a "pre-pay" system of road user charging. This involves the user "loading" the card with funds prior to road use, and the OBE debiting the funds from the card as appropriate. Pre-pay systems significantly reduce the financial complexity of road user charging schemes, and their precedent has already been set in other transport applications (i.e. London Underground's "Oyster" card). City based "ring fence" congestion schemes may favour such a pre-pay model.
User Identification - Permitting the operation of an OBE with any valid user Smart Card (rather than just that of the user to which the OBE was originally assigned) provides for a solution to the use of rental vehicles by multiple operators/drivers under a road user charging scheme. Importantly, the vehicle rental company does not play any part in the financial transaction as a result of road use, and therefore does not carry financial risk arising from use of the vehicle by others.

The OBE can communicate with the Smart Card by one of two means;
electrical contact (ISO 7816)
wireless "contactless" (ISO 14443-2)

### Processing Engine

An on-board processor is required, for example to take the raw data stream from the GPS sub-system, integrate the supplementary sensor information, calculate driven distance and effect the road user charging (or ETC) application.

Depending upon the complexity and volume of processing required, either a dedicated CPU may be employed or the processing capability already embodied within the GPS chipset utilised.

### Dedicated CPU

A dedicated CPU provides for maximum flexibility as it can be sized to accommodate the processing task as required. The downside is that it is an additional component which increases both cost and power consumption, the latter being very important from a thermodynamic perspective and if the OBE is envisaged to operate for extended periods on battery power.

### Utilisation of the existing GPS chipset

GPS chipsets necessarily contain a CPU for performing the correlation mathematics fundamental to the positioning operation. During acquisition (or re-acquisition) of a position fix, and upon initialisation of the GPS (either "warm" or "cold" start) or after loss of an existing fix, this CPU is heavily utilised. During acquisition, approximately 70% of the CPU's capacity is consumed.

However, once a fix has been obtained, a much lower overhead (say only 30% of total CPU capacity) is required, the remainder therefore being available for other functions such as execution of the OBE software necessary to support the road user charging (and other) functions. The disadvantage of using the GPS chipset as the OBE CPU is one of increased complexity from a software design and task scheduling perspective, in addition to a limitation upon expansion given the processor power limitation imposed by the particular GPS chipset used.

### Operating System

The OBE requires a compact, reliable and efficient Real Time Operating System (RTOS). Suitable candidate RTOSs are known to the persons skilled in the art.

The selection of the RTOS will be one of the primary determinants as to the processor power and memory required on-board the OBE.

### Memory

The amount of memory required within the OBE is determined by the features implemented.

### Power

Given that the OBE may be designed to satisfy both the lorry and passenger car road user charging markets, it is important that any power connection means (either direct connection to the vehicle or via a cigarette lighter socket charger) support both 12 and 24 volt operation with auto-sense capability. This requirement arises because large commercial vehicles operate on 24 volts whereas light commercial vehicles and all passenger cars operate on 12 volts.

The preferred OBE design provides for both permanent power connection (which is anticipated in the majority of road user charging applications), but also for battery operation.

To achieve the latter, the design is optimised for low power consumption which also has the beneficial effect of minimising the heat generated internally. For battery powered operation, the battery cells will be provisioned as part of the enclosure. This is an example of customisation of the enclosure to provide for features not inherent within the base circuit board design.

Irrespective of the means by which the OBE is powered and charged, the operational resilience of the solution can be provided for by any or all of the following:
The input power to the OBE is regulated and noise suppressed such that over and under voltages, noise (especially High Tension noise) and surges do not affect its operation or cause damage.

The OBE incorporates a small on-board (integrated) resilient power system (either battery or capacitor) to ensure operation continues if the vehicle power supply to the OBE is interrupted. Such power interruptions occur in normal operation during starting, or in the event of an electrical fault / fuse trip.

Given that this battery reserve to overcome transient power outages might be specified as part of a scheme requirement, it is incorporated into the enclosure such that different battery capacities may be provisioned as part of the characterisation process.

### Permanent Power

The OBE can provide for connection into two different sources within the vehicle:
Permanent Live - providing 12/24 volts irrespective of the status of the vehicle ignition.
Ignition Sense - providing 12/24 volts only when the vehicle ignition is switched on. This provides the OBE with an indication of when the vehicle is in operation, whilst the former provides for operation should the vehicle be operated for periods with the ignition switched off. Such operation is possible for some diesel vehicles, and usually employed in connection with tachograph fraud.

All that is required between the OBE (in the cabin) and the wiring loom (within the dashboard facia) is a single 4 core power wire.

### Battery Power

A battery powered OBE requires characterisation of the enclosure to accommodate the batteries and charging circuit. As a consequence, the enclosure for a battery powered OBE is likely to be larger than that for a permanent power connected OBE.

### Man-Machine Interface (MMI)

Significant differences between the requirements of the various national schemes are exhibited in respect of the MMI requirements, which typically comprise:
The On/Off switch (if not excluded by the scheme requirements)
Additional input switches (to indicate presence of a trailer, draw-bar trailer, tow/carry)
Status lights and audible alerts (to indicate the operational status of the OBE)
Digital (textual) displays (to display more detailed information to the user)

For example, the German Toll Collect scheme requires that the road segment and associated charge is displayed to the user.

As a result of these wide variances, it would not be wise to provision the MMI on the main PCB of the next generation OBE. Instead, only the appropriate support interface exists on the base PCB, with a simple daughter card to support the MMI requirement being integrated into the enclosure. This enables the OBE to be characterised for a specific MMI requirement at time of manufacture.

### Mounting Arrangements

The OBE is designed such that it is sufficiently light in weight and compact in order that it can be mounted on the inside of the vehicle windscreen.

A number of different methods might be employed to connect the OBE to the windscreen.

Any strategy of concealing the OBE (i.e. in the engine compartment or boot) requires an appropriate enclosure, in addition to a repeated "satellite" unit comprising, for example, MMI, status display and Smart Card reader on near the driver in order that the OBE can indicate status its status to the driver, and so the driver can interact with the OBE via the input buttons and insert/remove the Smart Card. Further, external GPS and DSRC antenna will also be required, increasing component cost, and installation time and cost.

### Characterisation Matrix

The characterisation matrix provides insight into how the base PCB of the next generation OBE might be characterised for a specific national road user charging scheme.

### Core Functionality:

■ GPS sub-system
   o GPS receiver
   o Internal GPS antenna
   o Connector for external antenna
■ 5.8Ghz microwave DSRC subsystem
   o Microwave RF and Baseband components
   o Internal microwave antennae
■ Gyro and Tachometer input
■ Smart Card reader
■ Power protection circuitry
■ MMI interface circuitry

### Characterisation of Base PCB (at time of manufacture)

■ GSM/GPRS module
■ Integrated GSM antenna
■ MMI and Power cable connectors

### Characterisation of Enclosure (at time of manufacture)

■ Enclosure plastics
   o Permanent Power PSU and cable connectivity
   o Battery housing and charging circuit
■ MMI Daughter Card

### Optional External Components

■ External 5.8Ghz DSRC assembly
■ External IR DSRC assembly
■ External 5.8GHz Italian Telepass DSRC assembly
■ External 5.9Ghz USA DSRC assembly

### Glossary

- ADM: Autonomous Distance Measurement
- ANPR: Automatic Number Plate Recognition
- API: Application Programming Interface
- CAI: Charge Area Identification
- CCD: Charge Coded Distance
- CRM: Customer Relationship Management
- CVDR: Charge Validation Data Requests
- DSRC: Dedicated Short Range Communications
- EETS: European Electronic Toll Service
- ETC: Electronic Toll Collection
- GPRS: Radio Technology for GSM
- GPS: Global Positioning System
- GSM: Global System for Mobile communications
- HDLC: High-level Data Link Control
- HMCE: Her Majesty's Customs & Excise
- LRUC: Lorry Road User Charging
- MMI: Man-Machine Interface
- OBE/OBU: On-Board Equipment/Unit
- PCB: Printed Circuit Board
- PSU: Power Supply Unit
- RSI: Road Segment Identification
- RSR: Route Summarisation and Reconstruction
- RTOS: Real Time Operating System
- SCR: Statement Credibility Record
- SIM: Subscriber Identity Module
- UMTS: Universal Mobile Telecommunications System
- VOSA: Vehicle and Operator Services Agency
- VRM: Vehicle Relationship Management

## Claims

1. Vehicle on-board equipment implementing at least one route usage evaluation scheme in use, including:
vehicle position means configured to provide vehicle position data;
map storage configured to hold one or more maps;
map matching means configured to receive vehicle position data from the vehicle position means and map data from the map storage and to match the vehicle position data to the map data and thereby determine route usage data; and
communication means configured to receive data for route usage evaluation and transmit it to a back-end system;
wherein the on-board equipment is configured to switch between an off-board map matching mode, in which the data received and transmitted by the communication means is changing vehicle position data from the vehicle position means, and
an on-board map matching mode in which the data received and transmitted by the communication means is route usage data from the map matching means.

2. Vehicle on-board equipment according to claim 1, wherein internal scheme parameters and/or a new scheme to be implemented and/or data storage and transfer considerations trigger the mode switch.

3. Vehicle on-board equipment according to claim 2, including: a scheme territory means configured to hold at least one relevant territory definition for the at least one scheme and an identification means which is configured to recognise which scheme, if any, to implement by comparing the vehicle position from the vehicle position means with the territory definition for the or each scheme.

4. Vehicle on-board equipment according to any of the preceding claims, configured to hold a network address of the back-end system for at least one scheme, wherein the communication means is configured to use the address to communicate with the back-end system of that scheme.

5. Vehicle on-board equipment according to any of the preceding claims, configured to hold an application in memory for each scheme, and to load the appropriate application and optionally one or more maps to implement a scheme.

6. Vehicle on-board equipment according to any of the preceding claims, which is configured to implement a home scheme and at least one visited scheme.

7. Vehicle on-board equipment according to any of the preceding claims, configured to download a map for a scheme from the back-end system according to one or more predetermined criteria and then preferably switch from off-board to on-board mode for that scheme.

8. Vehicle on-board equipment according to any of preceding claims 2 to 7, wherein the scheme territory definition defines a charge area and the map matching means is configured to use charging scheme parameters; route usage data is determined as charge coded distance; and the map matching means is preferably configured to accrue charge coded distance and send it to the communication means in batches.

9. Vehicle on-board equipment according to any of the preceding claims, configured to provide a statement credibility record, which lists route usage, the communication means being preferably configured to send the statement credibility record to the back-end system with the route usage evaluation data.

10. Vehicle on-board equipment according to any of the preceding claims, including: route summarisation means producing a summarised route and route log means storing the summarised route for off-board map matching.

11. Vehicle on-board equipment according to any of the preceding claims configured to use on-board mode if there is an available map in the map means for the scheme implemented.

12. Vehicle on-board equipment according to any of the preceding claims, configured to delete a selected map held in the map storage to download a new map.

13. Vehicle on-board equipment according to any of the preceding claims, wherein the communication means is configured to poll the back-end system periodically to ascertain if updates are available.

14. Vehicle on board equipment according to any of the preceding claims, wherein the map matching means is inoperative in the off-board mode.

15. A back-end system arranged to operate at least one route usage evaluation scheme, for vehicle on-board equipment (OBE) in use, including:
a communication unit configured to receive data for route usage evaluation for the route usage evaluation scheme from on-board equipment; and transmit updates to on-board equipment and
a billing unit configured to produce bills for each on-board equipment according to the route usage evaluation data; wherein the route usage evaluation data is changing vehicle position data received from on-board equipment operated in an off-board mode, and route usage data resulting from a map matching process performed by on-board equipment operated in an on-board mode.

16. A back-end system according to claim 15, further comprising a flag unit which sets a flag whenever an update is required to be downloaded to an OBE.

17. A back-end system according to claim 15 or 16, configured so that updates to be propagated to a plurality of OBEs are staggered over time to avoid network overloading.

18. A back-end system according to any of the preceding back-end system claims, wherein a parameter in the flag unit indicates urgency of data required to be downloaded.

19. A back-end system according to any of the preceding back-end system claims, wherein the communication unit uses an additional messaging system to contact OBEs proactively as necessary.

20. A back-end system according to any of the preceding back-end system claims, configured to download date stamped updates and new scheme data ahead of a go-live time.

21. A back-end system according to any of the preceding back-end system claims, configured to download only the most recently updated portions of updated data.

22. An on-board method of implementing at least one route usage evaluation scheme, including:
switching between an off-board map matching mode and an on-board map matching mode and then carrying out subsequent method steps;
wherein the steps for the off-board map matching mode include:
providing vehicle position data in the form of changing vehicle position data; and
transmitting the vehicle position data to a back-end system for route usage evaluation;
and the steps for the on-board map matching mode include
providing vehicle position data;
accessing a map held on-board;
using vehicle position and the map to match the vehicle position data to the map and thereby determine route usage; and
transmitting the route usage data for route usage evaluation to the back-end system.

23. A program which when executed by at least one hardware module configures the at least one hardware module to perform all the functions of the vehicle on-board equipment according to any of claims 1 to 14 or to perform all the functions of the back-end system according to any of claims 15 to 21.

24. A program which when executed by at least one hardware module causes the at least one hardware module to carry out the method steps of method claim 22.

## Patentansprüche

1. Fahrzeugseitige Ausrüstung, die mindestens ein im Gebrauch befindliches Streckenbenutzungs-Berechnungssystem implementiert, umfassend:
eine Fahrzeugpositionsvorrichtung, die dafür konfiguriert ist, Fahrzeugpositionsdaten zu liefern;
einen Kartenspeicher, der dafür konfiguriert ist, dass er eine oder mehrere Landkarten enthält;
eine Kartenvergleichsvorrichtung, die dafür konfiguriert ist, Fahrzeugpositionsdaten von der Fahrzeugpositionsvorrichtung und Kartendaten von dem Kartenspeicher zu empfangen, und dafür, die Fahrzeugpositionsdaten mit den Kartendaten zu vergleichen und hieraus die Streckenbenutzungsdaten zu ermitteln; und
eine Kommunikationsvorrichtung, die dafür konfiguriert ist, Daten für die Streckenbenutzungsberechnung zu empfangen und sie an eine Hintergrundeinrichtung zu senden,
wobei die fahrzeugseitige Ausrüstung dafür konfiguriert ist, umzuschalten zwischen einem Kartenvergleichsmodus außerhalb des Fahrzeugs, in dem die von der Kommunikationsvorrichtung empfangenen und übertragenen Daten die sich ändernden Fahrzeugpositionsdaten von der Fahrzeugpositionsvorrichtung sind, und
einem fahrzeugseitigen Kartenvergleichsmodus, in dem die von der Kommunikationsvorrichtung empfangenen und übertragenen Daten die Streckenbenutzungsdaten von der Kartenvergleichsvorrichtung sind.

2. Fahrzeugseitige Ausrüstung nach Anspruch 1, wobei interne Systemparameter und/oder ein neues zu implementierendes System und/oder Datenspeicher- und Übertragungsgesichtspunkte die Modusumschaltung auslösen.

3. Fahrzeugseitige Ausrüstung nach Anspruch 2, umfassend: eine Systemgebietsvorrichtung, die dafür konfiguriert ist, mindestens eine gültige Gebietsdefinition für das mindestens eine System zu halten, sowie eine Erkennungsvorrichtung, die dafür konfiguriert ist, zu erkennen, welches System - wenn überhaupt - zu implementieren ist, und zwar durch den Vergleich der Fahrzeugposition aus der Fahrzeugpositionsvorrichtung mit der Gebietsdefinition für das bzw. jedes System.

4. Fahrzeugseitige Ausrüstung nach irgendeinem der vorhergehenden Ansprüche, die dafür konfiguriert ist, eine Netzwerkadresse der Hintergrundeinrichtung für mindestens ein System zu halten, wobei die Kommunikationsvorrichtung dafür konfiguriert ist, die Adresse zum Kommunizieren mit der Hintergrundeinrichtung dieses Systems zu verwenden.

5. Fahrzeugseitige Ausrüstung nach irgendeinem der vorhergehenden Ansprüche, die dafür konfiguriert ist, für jedes System eine Applikation im Speicher zu halten, und dafür, zum lmplementieren eines Systems die geeignete Applikation zu laden, und wahlweise eine oder mehrere Karten.

6. Fahrzeugseitige Ausrüstung nach irgendeinem der vorhergehenden Ansprüche, die dafür konfiguriert ist, ein Inlandssystem und mindestens ein besuchtes System zu implementieren.

7. Fahrzeugseitige Ausrüstung nach irgendeinem der vorhergehenden Ansprüche, die dafür konfiguriert ist, eine Karte für ein System von der Hintergrundeinrichtung herunterzuladen, und zwar gemäß einem oder mehrerer vorbestimmter Kriterien, und anschließend bevorzugt vom nicht fahrzeugseitigen Modus in den fahrzeugseitigen Modus für dieses System umzuschalten.

8. Fahrzeugseitige Ausrüstung nach irgendeinem der vorhergehenden Ansprüche 2 bis 7, wobei
die Systemgebietsdefinition einen Gebührenbereich definiert, und die Kartenvergleichsvorrichtung dafür konfiguriert ist, Gebührensystemparameter zu verwenden;
die Streckenbenutzungsdaten als gebührencodierte Entfernung ermittelt werden; und
die Kartenvergleichsvorrichtung bevorzugt dafür konfiguriert ist, die sich ergebende gebührencodierte Entfernung zu ermitteln und sie der Kommunikationsvorrichtung schubweise zu senden.

9. Fahrzeugseitige Ausrüstung nach irgendeinem der vorhergehenden Ansprüche, dafür konfiguriert, eine Angaben-Vertrauenswürdigkeitsaufzeichnung zu liefern, die die Streckenbenutzung auflistet, wobei die Kommunikationsvorrichtung bevorzugt dafür konfiguriert ist, die Angaben-Vertrauenswürdigkeitsaufzeichnung mit den Streckenbenutzungs-Berechnungsdaten an die Hintergrundeinrichtung zu senden.

10. Fahrzeugseitige Ausrüstung nach irgendeinem der vorhergehenden Ansprüche, enthaltend: eine Streckenzusammenfassungsvorrichtung, die eine zusammengefasste Strecke erzeugt, und eine Streckenprotokolliervorrichtung, die die zusammengefasste Strecke für den Kartenvergleich außerhalb des Fahrzeugs speichert.

11. Fahrzeugseitige Ausrüstung nach irgendeinem der vorhergehenden Ansprüche, dafür konfiguriert, den fahrzeugseitigen Modus zu benutzen, falls in der Kartenvorrichtung für das implementierte System eine Karte verfügbar ist.

12. Fahrzeugseitige Ausrüstung nach irgendeinem der vorhergehenden Ansprüche, dafür konfiguriert, eine im Kartenspeicher gehaltene ausgewählte Karte zu löschen, damit eine neue Karte heruntergeladen wird.

13. Fahrzeugseitige Ausrüstung nach irgendeinem der vorhergehenden Ansprüche, wobei die Kommunikationsvorrichtung dafür konfiguriert ist, die Hintergrundeinrichtung periodisch abzufragen, um festzustellen, ob Aktualisierungen verfügbar sind.

14. Fahrzeugseitige Ausrüstung nach irgendeinem der vorhergehenden Ansprüche, wobei die Kartenvergleichsvorrichtung im nicht fahrzeugseitigen Modus nicht arbeitet.

15. Hintergrundeinrichtung, die so ausgelegt ist, dass sie zumindest ein Streckenbenutzungs-Berechnungssystem betreibt, und zwar für die verwendete fahrzeugseitige Ausrüstung (OBE), umfassend:
eine Kommunikationseinheit, die dafür konfiguriert ist, Daten für die Streckenbenutzungsberechnung für das Streckenbenutzungs-Berechnungssystem von der fahrzeugseitigen Ausrüstung zu empfangen und Aktualisierungen an die fahrzeugseitige Ausrüstung zu übertragen; und
eine Rechnungsstellungseinheit, die dafür konfiguriert ist, Rechnungen für jede fahrzeugseitige Ausrüstung abhängig von den Streckenbenutzungs-Berechnungsdaten zu erzeugen, wobei die Streckenbenutzungs-Berechnungsdaten sich verändernde Fahrzeugpositionsdaten sind, die von einer fahrzeugseitigen Ausrüstung empfangen werden, die im nicht fahrzeugseitigen Modus betrieben wird, und Streckenbenutzungsdaten, die von einem Kartenvergleichsvorgang stammen, den eine fahrzeugseitige Ausrüstung vornimmt, die in einem fahrzeugseitigen Modus betrieben wird.

16. Hintergrundeinrichtung nach Anspruch 15, zudem umfassend eine Flageinheit, die immer dann ein Flag setzt, wenn es erforderlich ist, eine Aktualisierung auf eine OBE herunterzuladen.

17. Hintergrundeinrichtung nach Anspruch 15 oder 16, dafür konfiguriert, dass an eine Vielzahl von OBEs zu verbreitende Aktualisierungen zeitlich gestaffelt werden, um eine Überlastung des Netzwerks zu verhindern.

18. Hintergrundeinrichtung nach irgendeinem der vorhergehenden Ansprüche zur Hintergrundeinrichtung, wobei ein Parameter in der Flageinheit die Dringlichkeit der Daten anzeigt, die heruntergeladen werden müssen.

19. Hintergrundeinrichtung nach irgendeinem der vorhergehenden Ansprüche zur Hintergrundeinrichtung, wobei die Kommunikationseinheit ein zusätzliches Benachrichtigungssystem verwendet, um bei Bedarf mit den OBEs in die Zukunft wirkend in Kontakt zu treten.

20. Hintergrundeinrichtung nach irgendeinem der vorhergehenden Ansprüche zur Hintergrundeinrichtung, dafür konfiguriert, mit einem Datum gekennzeichnete Aktualisierungen und neue Systemdaten herunterzuladen, und zwar vor dem Zeitpunkt des Inbetriebgehens.

21. Hintergrundeinrichtung nach irgendeinem der vorhergehenden Ansprüche zur Hintergrundeinrichtung, dafür konfiguriert, nur die allerneuesten aktualisierten Teile der aktualisierten Daten herunterzuladen.

22. Fahrzeugseitig verwendetes Verfahren zum lmplementieren mindestens eines Streckenbenutzungs-Berechnungssystems, enthaltend:
das Umschalten zwischen einem nicht fahrzeugseitigen Kartenvergleichsmodus und einem fahrzeugseitigen Kartenvergleichsmodus, und anschließend das Ausführen der nachfolgenden Verfahrensschritte,
wobei die Schritte für den nicht fahrzeugseitigen Kartenvergleichsmodus umfassen:
das Liefern von Fahrzeugpositionsdaten in der Form sich ändernder Fahrzeugpositionsdaten; und
das Übertragen der Fahrzeugpositionsdaten an eine Hintergrundeinrichtung für die Streckenbenutzungsberechnung;
und die Schritte für den fahrzeugseitigen Kartenvergleichsmodus umfassen:
das Liefern von Fahrzeugpositionsdaten;
das Zugreifen auf eine fahrzeugseitig gehaltene Karte;
das Verwenden der Fahrzeugposition und der Karte zum Vergleichen der Fahrzeugpositionsdaten mit der Karte, und dadurch das Feststellen der Streckenbenutzung; und
das Übertragen der Streckenbenutzungsdaten für die Streckenbenutzungsberechnung an die Hintergrundeinrichtung.

23. Programm, das, wenn es von mindestens einem Hardwaremodul ausgeführt wird, das mindestens eine Hardwaremodul dafür konfiguriert, alle Funktionen der fahrzeugseitigen Ausrüstung nach irgendeinem der Ansprüche 1 bis 14 auszuführen oder alle Funktionen der Hintergrundeinrichtung nach irgendeinem der Ansprüche 15 bis 21 auszuführen.

24. Programm, das, wenn es von mindestens einem Hardwaremodul ausgeführt wird, das mindestens eine Hardwaremodul veranlasst, die Verfahrensschritte des Verfahrensanspruchs 22 auszuführen.

## Revendications

1. Equipement embarqué à bord d'un véhicule permettant au moins un schéma d'enregistrement de péage routier en service, incluant :
- un moyen de positionnement du véhicule configuré pour fournir des données sur la position du véhicule,
- un stock de cartes configuré pour contenir une ou plusieurs cartes,
- un moyen d'association de cartes configuré pour recevoir les données de positionnement du véhicule depuis le moyen de positionnement du véhicule et des données de cartes depuis le stock de cartes et pour associer les données de position du véhicule aux données de cartes et ainsi déterminer les données d'enregistrement de péage routier, et
- un moyen de communication configuré pour recevoir des données pour l'enregistrement de péage routier et le transmettre à un système dorsal de traitement,
**caractérisé en ce que** l'équipement embarqué est configuré pour basculer entre un mode d'association de cartes non embarqué, dans lequel les données reçues et transmises par le moyen de communication modifient les données de position du véhicule provenant du moyen de positionnement du véhicule, et un mode d'association de cartes embarqué dans lequel les données reçues et transmises par le moyen de communication sont des données dé péage routier provenant du moyen d'association des cartes.

2. Equipement embarqué pour véhicule selon la revendication 1, **caractérisé en ce que** les paramètres internes du mode et/ou un nouveau mode à mettre en oeuvre et/ou des considérations de stockage ou de transmission de données déclenchent le basculement de mode.

3. Equipement embarqué pour véhicule selon la revendication 2, incluant un moyen territorial de schéma configuré pour contenir au moins une définition pertinente du territoire pour le au moins un schéma et un moyen d'identification qui est configuré pour reconnaître quel schéma, s'il y en a, à mettre en oeuvre en comparant la position du véhicule provenant du moyen de positionnement de véhicule avec la définition du territoire pour le ou chacun des schémas.

4. Equipement embarqué pour véhicule selon l'une quelconque des revendications précédentes configuré pour contenir une adresse de réseau du système arrière pour au moins un schéma, **caractérisé en ce que** le moyen de communication est configuré pour utiliser l'adresse pour communiquer avec le système arrière de ce schéma.

5. Equipement embarqué pour véhicule selon l'une quelconque des revendications précédentes, configuré pour contenir une application en mémoire pour chaque schéma, et pour charger l'application appropriée et éventuellement une ou plusieurs cartes mettre un schéma en oeuvre.

6. Equipement embarqué pour véhicule selon l'une quelconque des revendications précédentes, qui est configuré pour mettre en oeuvre un schéma à domicile et au moins un schéma de visite.

7. Equipement embarqué pour véhicule selon l'une quelconque des revendications précédentes configuré pour télécharger une carte pour un schéma depuis le système dorsal de traitement selon un ou plusieurs critère prédéterminé et ainsi de préférence bascule d'un mode non-embarqué à un mode embarqué pour ce schéma.

8. Equipement embarqué pour véhicule selon l'une quelconque des revendications précédentes 2 à 7, **caractérisé en ce que** la définition du territoire de schéma définit une zone de charge et le moyen d'association des cartes est configuré pour utiliser les paramètres de chargement de schéma, les données d'enregistrement de péage routier sont déterminées comme une distance de charge codée, et le moyen d'association des cartes est de préférence configuré pour réguler la distance de charge codée et l'envoyer au moyen de communication par paquets.

9. Equipement embarqué pour véhicule selon l'une quelconque des revendications précédente configuré pour fournir un dossier de crédibilité de déclaration, qui liste le péage routier, le moyen de communication étant de préférence configuré pour envoyer le dossier de crédibilité de déclaration au système arrière avec les données d'enregistrement de péage routier.

10. Equipement embarqué pour véhicule selon l'une quelconque des revendications précédentes incluant un moyen pour résumer la route produisant une route résumée et un moyen de journal de la route stockant la route résumée pour l'association non embarquée des cartes.

11. Equipement embarqué pour véhicule selon l'une quelconque des revendications précédentes configuré pour utiliser le mode embarqué s'il y a une carte disponible dans le moyen de carte pour le schéma mise en oeuvre.

12. Equipement embarqué pour véhicule selon l'une quelconque des revendications précédentes configuré pour effacer une carte choisie contenue dans le stockage de cartes pour télécharger une nouvelle carte.

13. Equipement embarqué pour véhicule selon l'une quelconque des revendications précédentes, **caractérisé en ce que** le moyen de communication est configuré pour sonder le système arrière périodiquement pour déterminer si des mises à jour sont disponibles.

14. Equipement embarqué pour véhicule selon l'une quelconque des revendications précédentes, **caractérisé en ce que** le moyen d'association des cartes est inopérant dans le mode non embarqué.

15. Système arrière prévu pour faire fonctionner au moins un schéma d'enregistrement de péage routier, pour l'équipement embarqué pour véhicule (OBE) utilisé, comprenant :
- une unité de communication configurée pour recevoir des données pour l'enregistrement du péage routier pour le schéma d'enregistrement de péage routier depuis l'équipement embarqué et transmettre les mises à jour à l'équipement embarqué et
- une unité de facturation configurée pour produire des factures pour chaque équipement embarqué selon les données d'enregistrement de péage routier, **caractérisé en ce que** les données d'enregistrement de péage routier changent les données de position du véhicule reçues depuis l'équipement embarqué utilisé en mode non embarqué, et les données de péage routier résultant d'un processus d'association des cartes réalisé par l'équipement embarqué utilisé en mode embarqué.

16. Système arrière selon la revendication 15, comprenant en outre une unité de marquage qui place une marque chaque fois qu'une mise à jour doit être téléchargée dans un OBE.

17. Système arrière selon la revendication 15 ou 16, configuré de façon à ce que les mises à jour à transmettre à plusieurs OBE sont décalées dans le temps de façon à éviter de surcharger le réseau.

18. Système arrière selon l'une quelconque des revendications précédentes du système dorsal de traitement, **caractérisé en ce qu'**un paramètre dans l'unité de marquage indique l'urgence des données devant être téléchargées.

19. Système arrière selon l'une quelconque des revendications précédentes du système dorsal de traitement, **caractérisé en ce que** l'unité de communication utilise un système supplémentaire de messagerie pour contacter les OBE de manière proactive si nécessaire.

20. Système arrière selon l'une quelconque des revendications précédentes du système dorsal de traitement configuré pour télécharger des mises à jour datées et des données d'un nouveau schéma en avance du temps d'entrée en service.

21. Système arrière selon l'une quelconque des revendications précédentes du système dorsal de traitement configuré pour télécharger uniquement les parties mises à jour les plus récemment mises à jour des données mises à jour.

22. Méthode embarquée de mise en oeuvre d'au moins un schéma d'enregistrement de péage routier, incluant :
- le basculement entre un mode non embarqué d'association de cartes et un mode embarqué d'association de cartes et ensuite la mise en oeuvre les étapes suivantes de la méthode,
**caractérisée en ce que** les étapes pour le mode non embarqué d'association de cartes comportent :
- la fourniture de données de position du véhicule sous forme de données de position changeante du véhicule, et
- la transmission de données de position du véhicule à un système dorsal de traitement pour l'enregistrement du péage routier,
et les étapes pour le mode embarqué d'association des cartes comprennent :
la fourniture des données de position du véhicule,
l'accession à une carte contenue à bord,
l'utilisation de la position du véhicule et de la carte pour associer les données de position du véhicule à la carte et ainsi déterminer le péage routier, et
- transmettre les données du péage routier pour l'enregistrement du péage routier au système dorsal de traitement.

23. Programme qui lorsque exécuté par au moins un module de hardware configure le au moins un module de hardware pour réaliser toutes les fonctions de l'équipement embarqué pour véhicule selon l'une quelconque des revendications 1 à 14 ou pour réaliser toutes les fonctions du système dorsal de traitement selon l'une quelconque des revendications 15 à 21.

24. Programme qui lorsque exécuté par au moins un module de hardware active le au moins un module de hardware de mettre en oeuvre les étapes de la méthode de la méthode selon la revendication 22.
